# EUROPEAN PATENT APPLICATION

(11) **EP 2 615 569 A1**
(43) Date of publication of application: **17.07.2013**
(21) Application number: 10856977.3
(22) Date of filing: 08.09.2010
(51) Int. Cl.: G06F 21/24, G06F 21/22

(54) **INFORMATION PROCESSING APPARATUS**

(71) Applicant: Kabushiki Kaisha Toshiba, Inc., Tokyo 105-8001 (JP)
(72) Inventor: AJITOMI, Daisuke, Tokyo 105-8001 (JP); ISE, Kotaro, Tokyo 105-8001 (JP)
(74) Representative: HOFFMANN EITLE
(86) International application number: PCT/JP2010/065445
(87) International publication number: WO 2012/032628

(57) **Abstract**

A user information providing apparatus 101 stores user information in a user information accumulation management unit 203. When receiving a user information using program from the servers 102, the user information providing apparatus 101 analyzes the user information using program, extracts user attribute information to be used, and refers to filter information stored in a filter information accumulation management unit 203 so as to determine whether to permit use of the user attribute information. In the case where it is determined that use of the user attribute information is not permitted, the user information providing apparatus 101 does not execute all or a part of the user information using program so as to reject an access of the user information using program to the user attribute information. In the case where it is determined that use of the user attribute information is permitted, the user information providing apparatus 101 executes the user information using program so as to permit the access to the user attribute information.

## Description

### Field

The present invention relates to an information processing apparatus.

### Background

Conventionally, there is a technique that provides user information, which is accumulated in an information processing apparatus, to a service provider that uses communication infrastructure. This information processing apparatus includes a PC (Personal Computer), a mobile phone, and AV equipment with a communication function. The user information includes, for example, attribute information of an information processing apparatus used by a user, personal information of the user, and operation history information. The operation history information indicates a history of operation input by the user, which is received by the information processing apparatus. The technique includes a technique with an interface (Geolocation API) that transmits current position information to a server of the service provider through a web browser (see Non Patent Literature 1). The current position information indicates a current position of the information processing apparatus using latitude and longitude. In the technique of Non Patent Literature 1, when the information processing apparatus receives an HTML document including the Geolocation API, the information processing apparatus notifies the user of the request for disclosure of the current position information using the API. This allows the user to select whether to disclose the current position information. The API controls access to the current position information based on the selection. In the Geolocation API, it is implicitly specified that a disclosure range of the current position information is the service provider as an interface specification. In order to change the disclosure range to, for example, a range within the information processing apparatus, the following method is contrived. The method defines a new interface at the same level as the Geolocation API, and uses this interface to control access to the current position information in units of interfaces. In the case where the current position information employs not latitude and longitude but information in a rougher granularity such as prefectures and municipalities, the following method is contrived. The method also defines a new interface at the same level as the Geolocation API, and uses the interface to control access to the current position information in units of interfaces.

### Citation List

### Non Patent Literature

Non Patent Literature 1: W3C Geolocation API Specification Editor's Draft 24 August 2009 http://dev.w3.org/geo/api/spec-source.html Summary

### Technical Problem

As described above, in the technique of Non Patent Literature 1, an interface defines specifications including a disclosure range and usage. The technique controls access to information in units of interfaces. Thus, the technique has difficulty in controlling in accordance with the disclosure range and in accommodating flexible changes of the usage. For example, in the case where the technique in Non Patent Literature 1 is applied to the technique that provides the user information, which is accumulated in the information processing apparatus, to a service provider, the technique has difficulty in controlling access in units of information in accordance with the disclosure range, in response to a request for using the user information from the service provider. There is a possibility that the usage of the user information by the service provider can not be changed flexibly.

The present invention has been made in view of the above-described circumstances, and it is an object of the present invention to provide an information processing apparatus that controls access in units of user attribute information in accordance with a disclosure range, in response to a request for using user information from a server, and flexibly changes usage within the disclosure range.

### Solution to Problem

In order to solve the problem mentioned above and to achieve the object, the present invention is an information processing apparatus that includes: a first storage unit configured to store user information, the user information including a plurality of pieces of user attribute information, the user attribute information indicating of attribution of a user; a receiver configured to receive a user information using program from a server, the user information using program being configured to access the user information with a unified method; an analyzer configured to analyze the received user information using program so as to extract the user attribute information to be used; a second storage unit configured to store use availability information for each of the pieces of user attribute information, the use availability information indicating whether to permit use of the user attribute information; a determiner configured to determine whether to permit the use of the user attribute information, using the use availability information of the extracted user attribute information;
an executor configured to execute the user information using program based on the determination result by the determiner; and a controller configured to: prevent the executor from executing at least part of the user information using program, so as to reject an access from the user information using program to the user attribute information if the use of the user attribute information is determined to be not permitted; and make the executor execute the user information using program, so as to permit the access to the user attribute information if the use of the user attribute information is determined to be permitted.

### Advantageous Effects of Invention

The present invention ensures the access control in units of the user attribute information in accordance with the disclosure range, for the request for using the user information from the server. The present invention also ensures the flexible change of the usage within the disclosure range.

### Brief Description of Drawings

FIG. 1 is a block diagram illustrating an exemplary configuration of an information processing system according to a first embodiment.
FIG. 2 is a diagram illustrating an exemplary configuration of user information.
FIG. 3 is a diagram illustrating an exemplary part of a description of a user information using program.
FIG. 4 is a table illustrating an exemplary configuration of filter information.
FIG. 5 is a flowchart illustrating a procedure of user information providing processing.
FIG. 6 is a block diagram illustrating an exemplary configuration of an information processing system according to a second embodiment.
FIG. 7 is a diagram illustrating an exemplary part of a description of a user information using program.
FIG. 8 is a table illustrating an exemplary data configuration of filter information.
FIG. 9 is a flowchart illustrating a procedure of user information providing processing.
FIG. 10 is a block diagram illustrating an exemplary configuration of an information processing system according to a third embodiment.
FIG. 11 is a table illustrating an exemplary data configuration of filter information.
FIG. 12 is a table illustrating exemplary server information.
FIG. 13 is a flowchart illustrating a procedure of reception processing in a user information using program.
FIG. 14 is a flowchart illustrating a procedure of user information providing processing.
FIG. 15 is a table illustrating an exemplary data configuration of filter information according to a fourth embodiment.
FIG. 16 is a table illustrating exemplary program related information.
FIG. 17 is a flowchart illustrating a procedure of reception processing in a user information using program.
FIG. 18 is a block diagram illustrating an exemplary configuration of an information processing system according to a fifth embodiment.
FIG. 19 is a flowchart illustrating a procedure of user information providing processing.
FIG. 20 is a table illustrating an exemplary configuration of user information according to a modification.
FIG. 21 is a table illustrating an exemplary configuration of user information according to a modification.
FIG. 22 is a diagram illustrating an exemplary part of a description of a user information using program according to a modification.
FIG. 23 is a flowchart illustrating a procedure of reception processing according to a modification.
FIG. 24 is a block diagram illustrating an exemplary configuration of an information processing system according to a modification.
FIG. 25 is a diagram illustrating an exemplary part of a description of a user information using program according to a modification.

### Description of Embodiments

Embodiments of information processing apparatuses according to the present invention will be described below in detail with reference to the accompanying drawings.

### First Embodiment

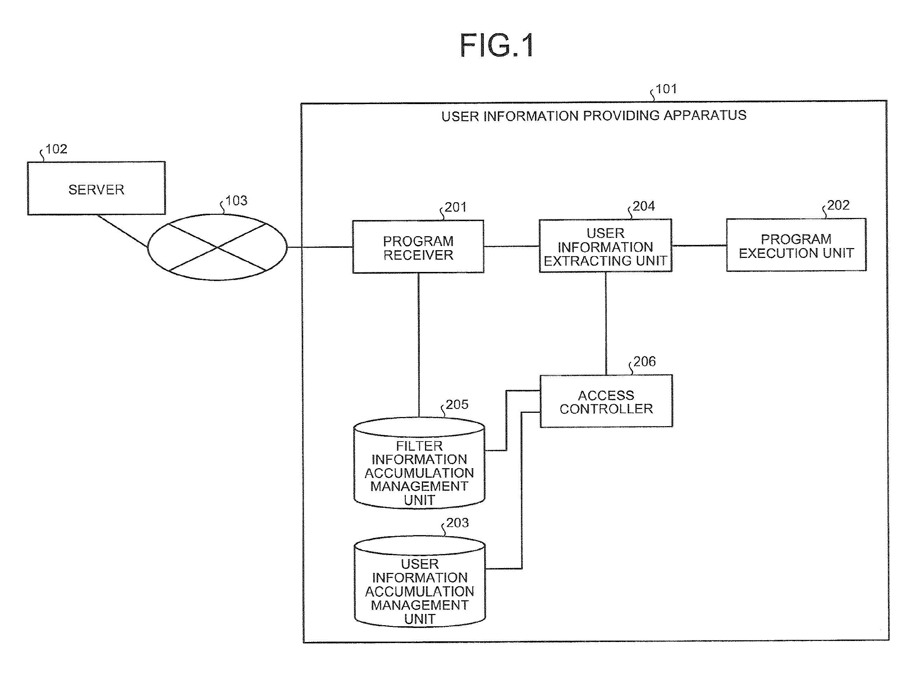

FIG. 1 is a block diagram illustrating an exemplary configuration of an information processing system including a user information providing apparatus 101, which is an information processing apparatus according to the first embodiment. FIG. 1 also illustrates an exemplary functional configuration of the user information providing apparatus 101. The information processing system includes the user information providing apparatus 101, and a server 102, which is operated by a service provider. The user information providing apparatus 101 and the server 102 are coupled together via a network 103. The network includes, for example, a LAN (Local Area Network), an intranet, Ethernet (registered trademark), the Internet, a WAN (Wide Area Network), a closed network NGN (Next Generation Network) that is quality-guaranteed, and a digital terrestrial broadcasting network.

Next, a hardware configuration of the user information providing apparatus 101 according to the first embodiment will be described. The user information providing apparatus 101 includes a controller, a main storage unit, an auxiliary storage unit, and a bus. The controller includes a CPU (Central Processing Unit) and the like, and controls the whole apparatus. The main storage unit includes a ROM (Read Only Memory) and a RAM (Random Access Memory) and the like, and stores various data and various programs. The auxiliary storage unit includes a HDD (Hard Disk Drive), and stores various data including contents and various programs. The bus couples these units one another. The user information providing apparatus 101 has a hardware configuration using an ordinary computer. The user information providing apparatus 101 is coupled to each of a displaying unit, an operation input unit, and a communication I/F (interface) through wired or wireless communication. The displaying unit displays information. The operation input unit includes a keyboard, a computer mouse, and a remote controller, and receives instruction input from a user. The communication I/F controls communication with the external device (for example, the server 102). The user information providing apparatus 101 communicates with the server 102 through a network 103. The user information providing apparatus 101 is achieved as, for example, a personal computer, a digital television, a hard disk recorder, an STB (Set Top Box), or a mobile device such as a mobile phone.

The server 102 includes a hardware configuration that uses an ordinary computer, approximately similarly to that of the user information providing apparatus 101. The server 102 may be a server that is operated by, for example, a web portal such as Yahoo! (registered trademark), an online retail website such as Amazon (registered trademark), a video sharing service website such as YouTube, an information website such as Gurunavi, an SNS (Social Network Service) website such as mixi (registered trademark), an IPTV service such as HIKARI TV (registered trademark). The server 102 may also be a transmitter of digital terrestrial broadcasting.

Next, in the hardware configuration, the CPU of the user information providing apparatus 101 executes various programs, which are stored in the main storage unit and the auxiliary storage unit, thus achieving various functions. The various functions will be described with reference to FIG. 1. The user information providing apparatus 101 includes a program receiver 201, a program execution unit 202, a user information accumulation management unit 203, a user information extracting unit 204, a filter information accumulation management unit 205, and an access controller 206. The program receiver 201, the program execution unit 202, the user information extracting unit 204, and the access controller 206 are generated on the main storage unit such as the RAM when the programs are executed by the CPU. The user information accumulation management unit 203 and the filter information accumulation management unit 205 are, for example, a database management system that is established in the main storage unit and the auxiliary storage unit. The user information accumulation management unit 203 and the filter information accumulation management unit 205 are assumed to be, for example, an XML (extensible Markup Language) database. Hereinafter, respective units will be described in detail.

The user information accumulation management unit 203 stores user information, and controls registration and deletion of the user information and access to the user information. The user information includes a plurality of pieces of user attribute information that are related to user attribute. The user information includes personal information (information indicative of name, age, address, sex, occupation, hobby and the like, information related to a credit card, and the like) of the user. The user information may also include operation history information of the user of the user information providing apparatus 101, device attribute information (information indicative of a serial number, a product name, and the like) of the user information providing apparatus 101. In the case where various sensors are mounted on the user information providing apparatus 101, the user information may include information (for example, information indicative of a current position, acceleration, various kinds of biological information such as a fingerprint, and the like) obtained from the various sensors. However, the user information may not necessarily include the exemplary pieces of user attribute information as described above. The user information may include various kinds of personal information that is not described as an example. Assume that in the first embodiment, the user information is expressed in XML (extensible Markup Language), and the user information accumulation management unit 203 is an XML database that stores the user information as an XML document. Assume that a common description format of the user information is used between the user information providing apparatus 101 and the server 102. Here, the common description format of the user information is, for example, an XML format where the same schema is shared by the user information providing apparatus 101 and the server 102.

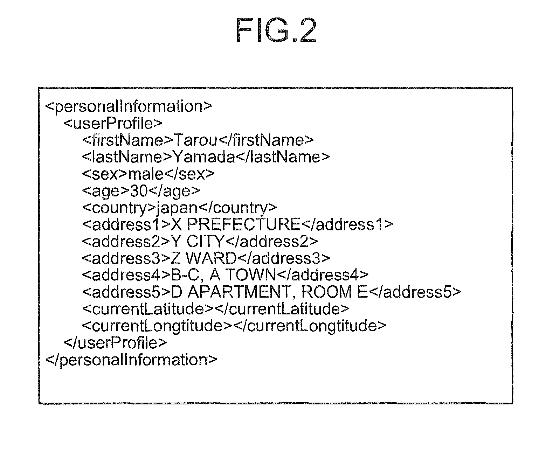

FIG. 2 is a diagram illustrating an exemplary configuration of the user information. In the drawing, each of tags <firstName>, <lsatName>, <sex>, <age> and so on between tags of <userProfile> and </userProfile> indicates a user attribute name ("first name", "last name", "sex", "age" and so on), which is a name assigned to the user attribute information. Values indicated between the respective tags are user attribute values that are values indicative of the respective pieces of user attribute information. For example, it illustrates that "first name" has a user attribute value of "Tarou". Accordingly, the user information including a plurality of pieces of user attribute information is stored in the user information accumulation management unit 203 for each user.

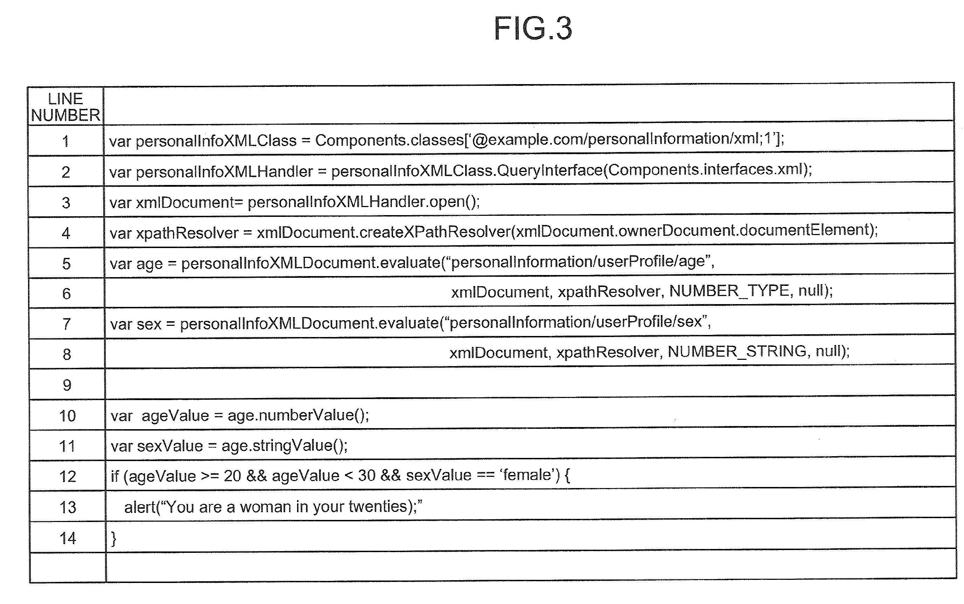

The program receiver 201 receives a user information using program from the server 102 through the network 103, and transmits the user information using program to the user information extracting unit 204. The user information using program is a program for accessing the user information stored in the user information providing apparatus 101 with a unified method. For example, the user information using program is a Java (registered trademark) Script program embedded in an HTML (Hypertext Markup Language) document. The program receiver 201 receives the user information using program. The program receiver 201 is an HTTP client that is used in an internet browser application, which is typified by IE (Internet Explorer), FireFox (registered trademark), Opera (registered trademark), or the like. In the user information using program, a description for accessing the user information is described using a common API (Application Programming Interface). The common API for accessing the user information employs, for example, an XPath. FIG. 3 is a diagram illustrating an exemplary part of a description of the user information using program. The drawing illustrates that age information and sex information are used in the user information using program.

The user information extracting unit 204 analyzes the user information using program sent from the program receiver 201, and extracts the user attribute information to be used when the user information using program is executed. Specifically, here, the user information using program is a Java (registered trademark) Script program. Thus, the user information extracting unit 204 is a software module hooked into the program execution unit 202 described later, which analyzes and executes the Java (registered trademark) Script.

Specifically, the user information extracting unit 204 receives, for example, the user information using program illustrated in FIG. 3. The user information extracting unit 204 then analyzes the user information using program so as to recognize that a user information using interface (common API) identified by "'example.com/personalInformation/xml;1"'(in the first line)) is called. That is, the user information extracting unit 204 recognizes that use of any piece of user information is requested through the common API. Further, the user information extracting unit 204 extracts the age information (personalInformation/userProfile/age) and the sex information (personalInformation/userProfile/) as user attribute information used by the program from the access code (from the fifth line to the eighth line) of the user attribute by the XQuery. Finally, the user information extracting unit 204 transmits the user attribute information to be used in the execution of the user information using program (here, the age information and the sex information) to the access controller 206 as an extraction result.

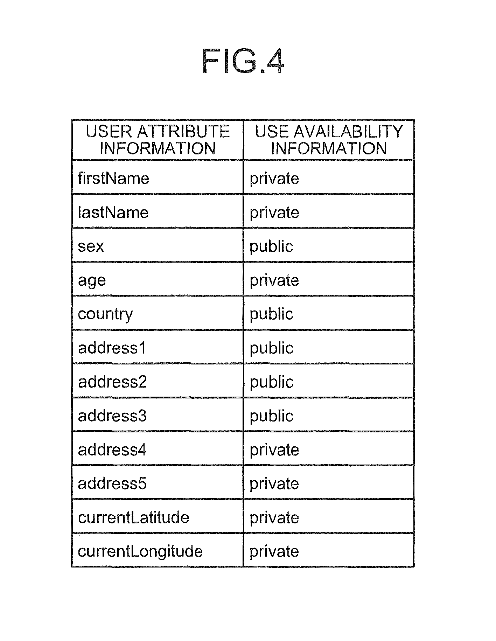

The filter information accumulation management unit 205 stores filter information that indicates whether to permit use of the respective pieces of user attribute information for the execution of the user information using program. The filter information accumulation management unit 205 controls registration and deletion of the filter information and access to the filter information. FIG. 4 is a table illustrating an exemplary configuration of the filter information. As illustrated in the drawing, each piece of user attribute information corresponds to a value of use availability information that takes two values of disclosure (public) and non-disclosure (private). The value of disclosure (public) means permission to use the user attribute information. The value of non-disclosure (private) means non-permission to use. The filter information is thus configured.

The access controller 206 determines whether to execute the user information using program that is received at the program receiver 201, based on the filter information, which is stored in the filter information accumulation management unit 205, and the extraction result, which is sent from the user information extracting unit 204. That is, in the case where the filter information indicates that use of the user attribute information, which is to be used in the execution of the user information receiving program, is not permitted, the access controller 206 does not send the user information using program to the program execution unit 202 so as to prohibit the user information using program from accessing the user attribute information. In the case where the filter information indicates that the use is permitted, the access controller 206 sends the user information using program to the program execution unit 202 so as to permit the user information using program to access the user attribute information. Assume that the above access controller 206 is a software module hooked into the program execution unit 202 described below, similarly to the user information extracting unit 204.

Specifically, for example, when the access controller 206 recognizes that the extraction result of the user information extracting unit 204 for the user information using program illustrated in FIG. 3 includes the age information (personalInformation/userProfile/age) and the sex information (personal Information/userProfile/), the access controller 206 uses the filter information illustrated in FIG. 4, and refers to the respective pieces of the use availability information of the age information and the sex information to determine whether to execute the user information using program. Since the age information is set to non-disclosure (private), the access controller 206 does not send the user information using program to the program execution unit 202 so as to reject an access of the user information using program to the age information. When the user information using program is executed to use the sex information only, or when country information (personalInformation/userProfile/country), which is set to disclosure (public), is used instead of the age information, the access controller 206 sends the user information using program to the program execution unit 202.

The program execution unit 202 executes the user information using program, which is sent from the access controller 206. Specifically, the program execution unit 202 has a function to analyze and execute an HTML renderer and a Java (registered trademark) Script. That is, the program execution unit 202 has a core function of the internet browser application. However, a processing system is not limited to the above processing system, similarly to the description language of the user information using program.

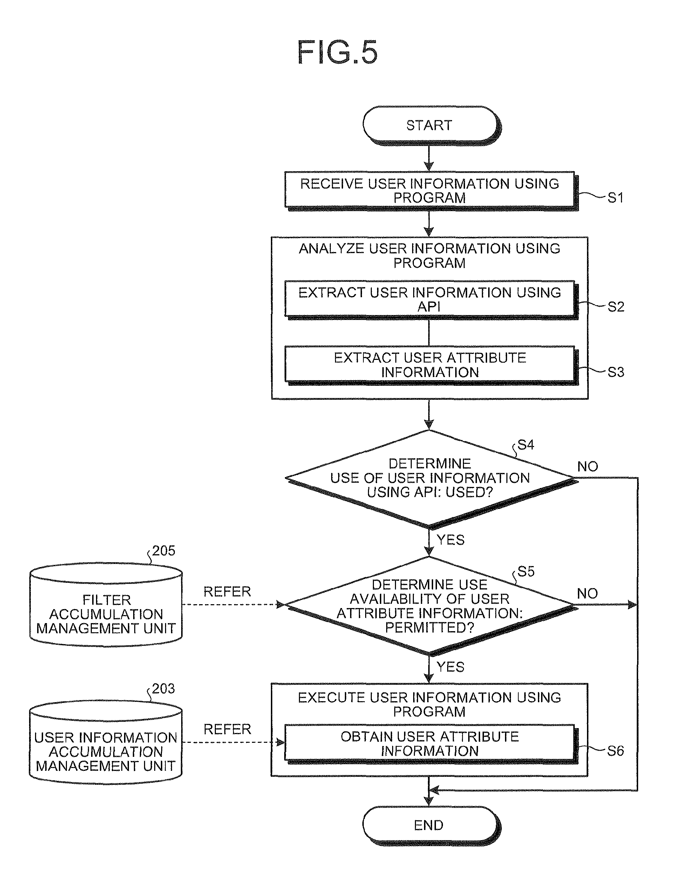

Next, a procedure of the user information providing processing, which is executed by the user information providing apparatus 101 according to the first embodiment, will be described with reference to FIG. 5. In the following description, the user information illustrated in FIG. 2, the user information using program illustrated in FIG. 3, and the filter information exemplarily illustrated in FIG. 4 are used. The user information providing apparatus 101 uses a function of the program receiver 201 as follows. The user information providing apparatus 101 accesses the server 102 through the network 103. Then, the user information providing apparatus 101 receives the HTML document where the user information using program is embedded, and obtains the user information using program (step S1). Next, the user information providing apparatus 101 uses a function of the user information extracting unit 204 as follows. The user information providing apparatus 101 analyzes the user information using program, which is obtained in step S1, and determines whether the user information using API is used (step S2). At this time, in the example of FIG. 3, the user information providing apparatus 101 determines whether to use the user information using API, based on whether the program code includes the interface of the common API for accessing the user information (in the first line and the second line). At the same time, the user information providing apparatus 101 extracts the user attribute information, which is used for execution of the user information using program, from an analysis result on the user information using program, which is obtained in step S1 (step S3). At this time, in the example of FIG. 3, the user information providing apparatus 101 extracts the user attribute information to be used based on whether the program code includes an access interface for accessing the user attribute information by the XQuery (in the fifth line to the eighth line). In this example, the age information and the sex information are extracted.

Subsequently, the user information providing apparatus 101 determines whether the user information using API is used (step S4). For example, the user information providing apparatus 101 may determine that the user information using API is used only when the user information using API is called (initialized), and use (reference) of the user attribute information through the user information using API is included, based on the extraction results. In contrast, even in the case where the reference of the user attribute information is not included, the user information providing apparatus 101 may determine that the user information using API is used based on the call of the user information using API only. In either case, in the case where the user information providing apparatus 101 determines that the user information using API is not used (NO in step S4), the user information providing apparatus 101 executes the user information using program obtained in step S1 as an ordinary Java (registered trademark) Script program embedded in the HTML document, and then terminates the processing. That is, the user information providing apparatus 101 terminates the processing without determining whether the use of the user attribute information is permitted.

On the other hand, in the case where the user information providing apparatus 101 determines that the user information using API is used (YES in step S4), the user information providing apparatus 101 operates as follows. The user information providing apparatus 101 uses the user attribute information extracted in step S3 to refer to the filter information of the filter information accumulation management unit 205. Then, the user information providing apparatus 101 determines whether to permit the use of the user attribute information, using a function of the access controller 206 (step S5). Then, in the case where the user information providing apparatus 101 determines that use of at least one piece of the user attribute information extracted in step S3 is not permitted, the user information providing apparatus 101 terminates the processing without executing the user information using program so as to reject an access of the user information using program to the user attribute information (NO in step S5). While in the case where the user information providing apparatus 101 determines use of all pieces of the user attribute information extracted in step S3 is permitted, the user information providing apparatus 101 executes the user information using program so as to permit the user information using program to access the user attribute information (YES in step S5) , reads out the user attribute information from the user information accumulation management unit 203 (step S6), and terminates the processing.

In the example of FIG. 4, the use availability information of the sex information, which is extracted in step S3, indicates disclosure (public), and the use availability information of the age information indicates non-disclosure (private). Accordingly, the user information providing apparatus 101 terminates the processing without executing the user information using program so as to reject an access of the user information using program to the sex information and the age information (YES in step S5). In the case where the use availability information of the age information indicates disclosure (public), the user information providing apparatus 101 executes the user information using program so as to permit the user information using program to access the sex information and the age information (YES in step S5), reads out the age information and the sex information from the user information accumulation management unit 203 (step S6), and terminates the processing.

Assume that at this time, the user information using program uses the age information and the sex information, which are read out, so as to change the content of the HTML document to be displayed. As a simple use case, if the age is less than ten years old, Chinese characters in the HTML document are displayed along with hiragana, or hiragana alone is displayed instead of Chinese characters. In this case, the user information, which is accumulated in the user information providing apparatus 101, is used. However, the user attribute information being used (the age information and the sex information) is not transmitted to the server 102. Therefore, the user attribute information is not open to public. Thus, the user information providing apparatus 101 can provide a service corresponding to the user attribute information without transmitting the user information to the server 102 of the service provider.

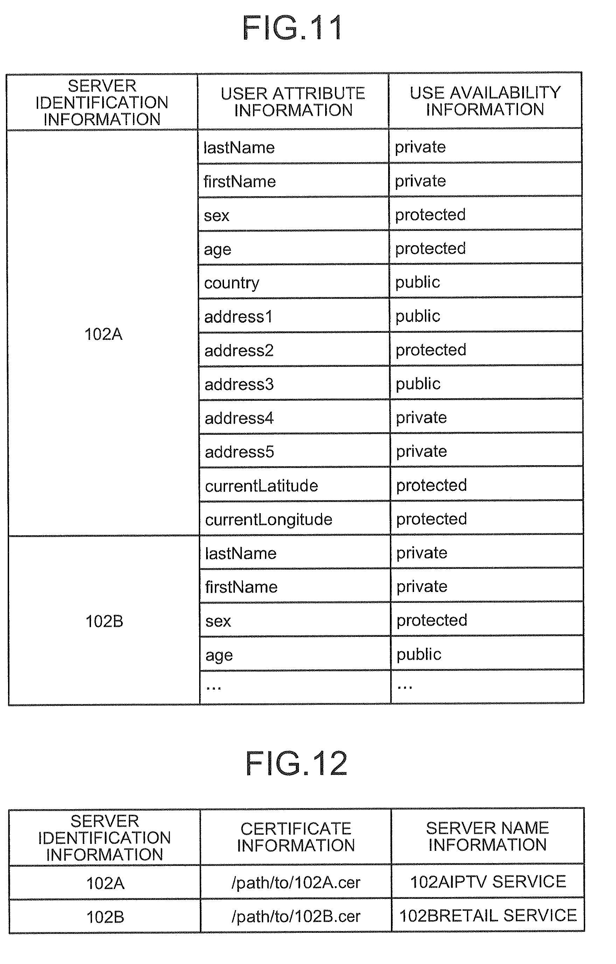

In step S5, in the case where the user information providing apparatus 101 rejects an access of the user information using program to the user attribute information (NO in step S5), the user information providing apparatus 101 may use a function of the program execution unit 202 as follows. The user information providing apparatus 101 ignores a part of description which describes that the user information using program uses the user attribute information (the age information and the sex information in the example of FIG. 11), and causes the displaying unit to display the HTML document, where the user information using program is embedded. Alternatively, the user information providing apparatus 101 may cause the displaying unit to display a notification that a display of the HTML document itself is rejected. The user information providing apparatus 101 permits access to the permitted user attribute information only, which is the sex information here (YES in step S5). In this case, the user information providing apparatus 101 may execute processing related to an access to the permitted user attribute information only in step S6, and read out the sex information only from the user information accumulation management unit 203. That is, the user information providing apparatus 101 does not execute processing related to an access only to the user attribute information that is not permitted, while the user information providing apparatus 101 may execute processing related to an access only to the user attribute information that is permitted in the user information using program.

As described above, according to the first embodiment, the user information providing apparatus ensures the access control in units of the user attribute information corresponding to the disclosure range for the request for using the user information from the server of the service provider. Further, the service provider flexibly changes usage of the user information within the disclosure range of the user attribute information to ensure targeted advertising using the permitted user attribute information, which is open to public, and recommendation services on contents and products. Specifically, the user information providing apparatus according to the first embodiment solves the following two problems pertaining to the Geolocation API described in the conventional technique.

First, Geolocation API allows the service provider to use the current position information indicating the current position of the user using latitude and longitude. However, there arises a problem that information to be used as the user information is limited to the latitude and longitude. User information useful for the targeted advertising by the service provider or the like includes various kinds of information even if the user information is limited to anonymized information without information that can identify an individual. The user attribute information is not limited to the above-described sex and age. For example, information indicative of address in granularity of prefectures or municipalities, occupation, hobby, watching history on TV, online shopping history, or the like is included in the user information as respective pieces of the user attribute information. The Geolocation API does not provide such an interface that uses user information indicative of the user attribute information other than the latitude and longitude. In the case where a new interface with the same granularity as that of the Geolocation API is defined to use another piece of the user information, there is a need to specify an interface for each piece of the user attribute information. It is realistically difficult to include various kinds of the user attribute information. The user information providing apparatus 101 according to the first embodiment is assumed to use the common representation format of the user information shared with the server 102, and also to use the common API that ensures a general purpose access to the user information. The user information providing apparatus 101 analyzes the information used in the common representation format and the common API, and extracts the user attribute information that is requested by the server 102. Thus, this provides a framework to flexibly use the user information stored in the user information providing apparatus 101.

Second, there is a problem that the Geolocation API has difficulty in controlling access in units of information. Non Patent Literature 1 mentions in Privacy Policy that the user must be asked to permit the use of the user information in units of the Geolocation API. However, this is specified in units of API and not in units of information. That is, in the Geolocation API, there is a possibility that an access to longitude and an access to latitude are not able to be individually controlled. In Geolocation API, for example, it is difficult to control the access such that the information on longitude is open to public, while the information on latitude is not open to public. For such a problem, the user information providing apparatus 101 according to the first embodiment is assumed to use the common representation format of the user information shared with the server 102, and also to use the general purpose access API to access the user information. The user information extracting unit analyzes the using information of the common representation format and the common API, and then extracts the user attribute information. Regarding the user attribute information, the user information providing apparatus 101 refers to the use availability information of the filter information to ensure the control of the flexible access in units of information.

### Second Embodiment

Next, a second embodiment of the information processing apparatus will be described. The same reference numerals designate corresponding or identical elements to those of the first embodiment and therefore such elements will not be further elaborated here.

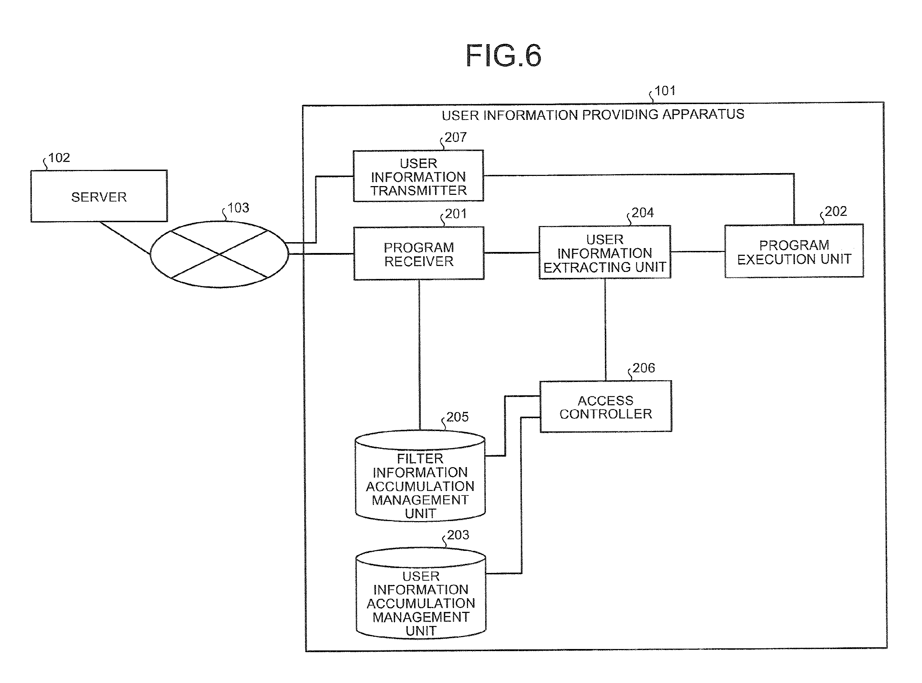

FIG. 6 is a block diagram illustrating an exemplary configuration of an information processing system including the user information providing apparatus 101 according to a second embodiment. FIG. 6 also illustrates an exemplary functional configuration of the user information providing apparatus 101. The user information providing apparatus 101 includes the program receiver 201, the program execution unit 202, the user information accumulation management unit 203, the user information extracting unit 204, the filter information accumulation management unit 205, and the access controller 206. The user information providing apparatus 101 further includes a user information transmitter 207. The user information transmitter 207 is generated on the main storage unit such as a RAM when the CPU executes the program. The respective functions of the program receiver 201, the program execution unit 202, and the user information accumulation management unit 203 are similar to those in the first embodiment. Thus, the respective functions will not be further elaborated here.

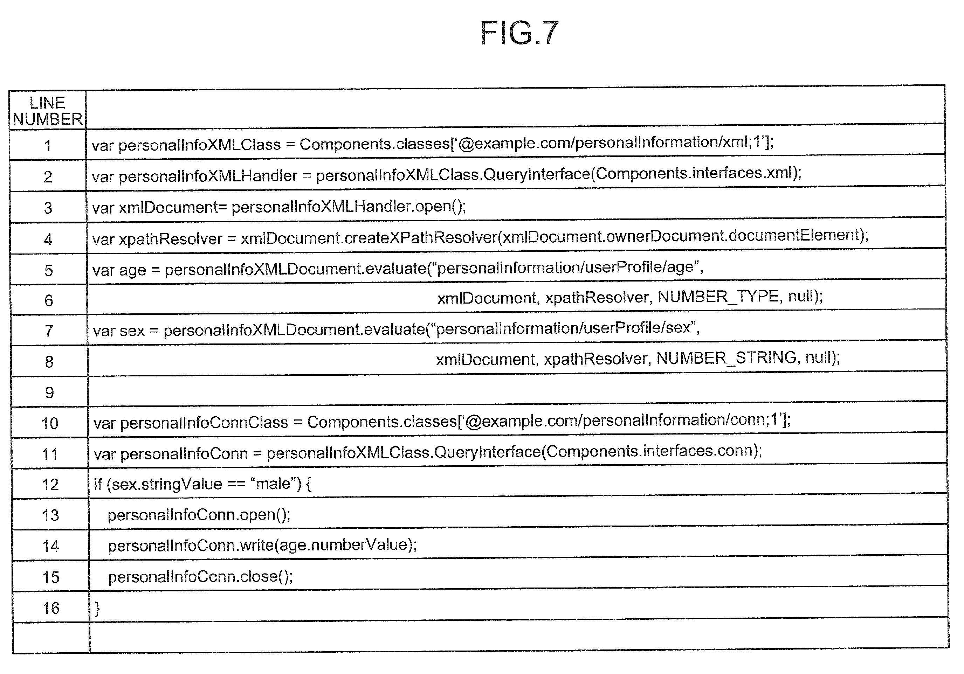

The user information extracting unit 204 analyzes a user information using program, which is transmitted from the program receiver 201, and extracts user attribute information that is used when the user information using program is executed. The user information extracting unit 204 also determines whether transmission of the extracted user attribute information to the server 102 is requested. The determination is performed by determining whether the user information using program includes a description that indicates transmission of the user attribute information expressed in the common description format to the server 102 using the common API. That is, the user information extracting unit 204 determines whether to transmit the user attribute information, based on whether the common API that transmits the user attribute information is used. FIG. 7 is a diagram illustrating an exemplary user information using program describing that transmission of the user attribute information is performed through the common API. The user information extracting unit 204 extracts the user attribute information that is requested to be used by the server 102 and whether to transmit it or not based on the description of the user information using program. The user information extracting unit 204 sends the extraction result to the access controller 206.

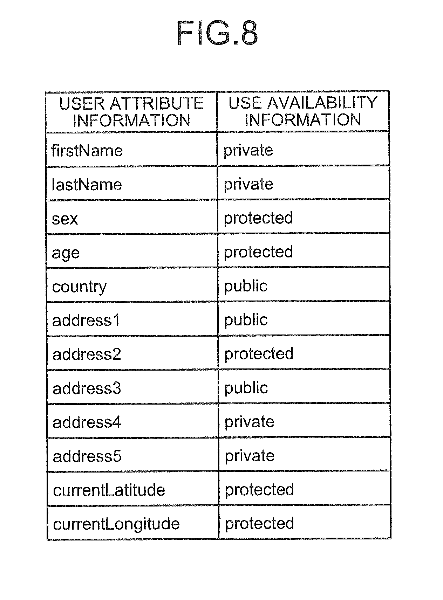

The filter information accumulation management unit 205 stores the filter information for respective pieces of the user attribute information, similarly to the first embodiment. However, use availability information corresponding to the user attribute information in the filter information is different from that of the first embodiment. The use availability information according to the second embodiment takes three values of disclosure (public), restricted disclosure (protected), and non-disclosure (private). The value of disclosure (public) means permitting to use the user attribute information and transmit to the server 102. The value of restricted disclosure (protected) means permission of reference of the user attribute information, but not permitting transmission to the server 102 and limiting the use of the user attribute information within the user information providing apparatus 101 (hereinafter referred to as restricted disclosure). The value of non-disclosure (private) means not permitting to use (neither reference nor transmission) the user attribute information. FIG. 8 is a table illustrating an exemplary data configuration of the filter information according to the second embodiment. As illustrated in the drawing, in this embodiment, one of the three values is set for each piece of the user attribute information as the use availability information.

Here, the restricted disclosure (protected) will be described. The restricted disclosure corresponds to, for example, usage of age information and sex information in the user information using program illustrated in FIG. 3. The user information using program exemplarily illustrated in FIG. 7 obtains the age information and the sex information through the common API. However, the obtained age information and sex information are used only for selecting target contents to be displayed and a displaying method, for contents such as an HTML document embedded in the user information using program. That is, the age information and the sex information, which are the obtained user attribute information, are not open to outside. In other words, the user attribute information is not leaked outside and privacy is protected. The restricted disclosure of the user attribute information ensures displaying characters in the HTML document only with hiragana for a user who is a child less than ten years old for example. This also ensures displaying characters in the HTML document with a large font size for a user who is an aged person equal to or more than seventy years old.

The access controller 206 uses extraction result transmitted from the user information extracting unit 204. The extraction result includes the user attribute information and whether to transmit to the server 102 or not, for each piece of user attribute information. The access controller 206 also uses the filter information stored in the filter information accumulation management unit 205. The access controller 206 then determines whether to execute the user information using program, which is received at the program receiver 201. In the case where the transmission to the server 102 is requested and the filter information indicates that one of use and transmission of the user attribute information is not permitted, the access controller 206 does not send the user information using program to the program execution unit 202 so as to reject an access of the user information using program to the user attribute information. In the case where the filter information indicates that reference and transmission of the user attribute information are permitted, the access controller 206 sends the user information using program to the program execution unit 202 so as to permit the user information using program to access the user attribute information. In the case where the transmission to the server 102 is not requested and the filter information indicates that the reference or transmission of the user attribute information is not permitted, the access controller 206 does not send the user information using program to the program execution unit 202 so as to reject an access of the user information using program to the user attribute information. In the case where the filter information indicates that the reference of the user attribute information is permitted, the access controller 206 sends the user information using program to the program execution unit 202 so as to permit the user information using program to access the user attribute information.

The user information transmitter 207 transmits the user attribute information to the server 102 according to the execution of the user information using program by the program execution unit 202. That is, when the user information using program describes that transmission of the user attribute information to the server 102 is executed through the common API, the user information transmitter 207 transmits the user attribute information to the server 102.

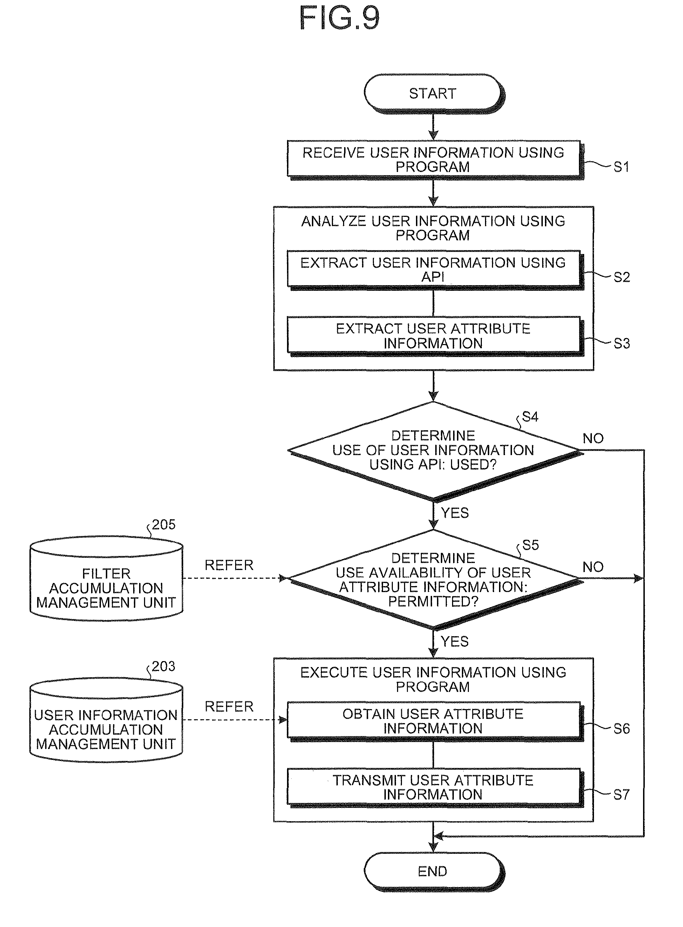

Next, a procedure of the user information providing processing, which is executed by the user information providing apparatus 101 according to the second embodiment, will be described with reference to FIG. 9. In the following description, the user information illustrated in FIG. 2, the user information using program illustrated in FIG. 7, and the filter information exemplarily illustrated in FIG. 8 are used. Steps S1 to S2 are similar to those in the first embodiment. In step S3, similarly to the first embodiment, the user information providing apparatus 101 extracts the user attribute information by using the function of the user information extracting unit 204. In the second embodiment, the user information providing apparatus 101 also determines whether transmission of the extracted user attribute information to the server 102 is requested. That is, the user information providing apparatus 101 determines whether the user information using program describes transmission of the extracted user attribute information to the server 102 through the common API. In the example of FIG. 7, the user information providing apparatus 101 determines whether the user attribute information is transmitted to the server 102 or not based on whether the program code includes an interface call (the tenth line and the eleventh line) of the common API for transmission to the server 102. Further, the user information providing apparatus 101 extracts user attribute information that is requested to be used by the server 102 and whether to transmit it or not based on the interface call (the thirteenth to the fifteenth lines) for actual transmission. As a result, the user information providing apparatus 101 extracts a request for transmission of the age information and no request for transmission of the sex information.

Subsequently, in step S4, the user information providing apparatus 101 determines whether the user information using API is used. For example, the user information providing apparatus 101 may determine that the user information using API is used based on the extraction result only when the user information using API is called, and a description to perform reference and transmission of the user attribute information through the user information using API is included. Alternatively, the user information providing apparatus 101 may determine that the user information using API is used when the user information using API is called though the description to perform the reference or the transmission of the user attribute information is not included. In either case, if the user information providing apparatus 101 determines that the user information using API is not used (NO in step S4), the user information providing apparatus 101 terminates the user information providing processing.

On the other hand, when the user information providing apparatus 101 determine that the user information using API is used (YES in step S4), In step S5, the user information providing apparatus 101 uses the user attribute information and whether to transmit it or not, which are extracted in step S3. Then, the user information providing apparatus 101 uses the function of the access controller 206 so as to refer to the use availability information corresponding to the user attribute information in the filter information stored in the filter information accumulation management unit 205, and determines whether to use the user attribute information. In the example of FIG. 7, transmission of the sex information is not requested while transmission of the age information is requested (the fourteenth line). In the filter information exemplarily illustrated in FIG. 8, the respective pieces of the use availability information of the sex information and the age information are both set to restricted disclosure (protected). That is, this indicates that transmission of the use availability information is not permitted. Thus, when at least one piece of the user attribute information extracted in step S3 has mismatch between whether to transmit it or not in the user information using program and the use availability information of the filter information, the user information providing apparatus 101 terminates the processing without executing the user information using program so as to rejects an access of the user information using program to the user attribute information (NO in step S5).

On the other hand, when the use availability information of the age information is set to disclosure (public) in FIG. 8, whether to transmit or not matches the use availability information for each piece of the user attribute information extracted in step S3. In this case (YES in step S5), the user information providing apparatus 101 executes the user information using program, and reads out the user attribute information (here, the sex information and the age information) from the user information accumulation management unit 203 (step S6) so as to permit the user information using program to access the user attribute information. Then, the user information providing apparatus 101 transmits the user attribute information (here, the age information) that is requested to be transmitted (step S7), and terminates the user information providing processing.

As described above, according to this embodiment, the user information providing apparatus ensures access control in accordance with the disclosure range in units of the user attribute information for the request for using the user information from the server of the service provider. Further, within the disclosure range of the user attribute information, this allows the service provider to flexibly change the usage of the user information to ensure targeted advertising, contents, and product recommendation services, using the user attribute information of disclosure that is permitted to be used.

For example, the Geolocation API of the conventional technique does not specify the usage of the obtained current position information regarding disclosure, but the Geolocation API is implicitly assumed to transmit the current position information to the server of the service provider. In view of this, permitting use of the Geolocation API may allow use of the current position information including transmission to the server. For example, even if the user attribute information is not transmitted to the server, contents to be displayed can be changed based on the age information and the sex information, thus achieving a useful service for users. However, it is difficult for the Geolocational API to specify a usage of the current position information and to permit the use based on the specified usage. The specified usage is, for example, use of the current position information is permitted insofar as the current position information is not open to outside and privacy is protected. In contrast, the user information providing apparatus 101 according to this embodiment permits or rejects use of information including whether to transmit or not to the server 102 based on the use availability information of the filter information. This protects privacy.

### Third Embodiment

Next, a third embodiment of the information processing apparatus will be described. The same reference numerals designate corresponding or identical elements to those of the first and second embodiments and therefore such elements will not be further elaborated here.

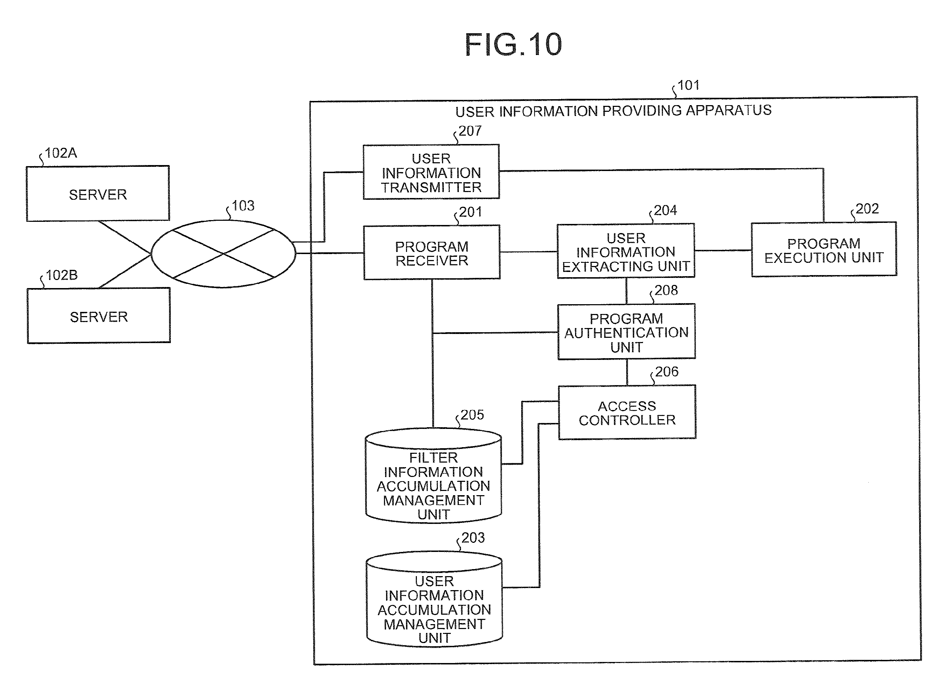

FIG. 10 is a block diagram illustrating an exemplary configuration of an information processing system including the user information providing apparatus 101 according to the third embodiment. FIG. 10 also illustrates an exemplary functional configuration of the user information providing apparatus 101. The user information providing apparatus 101 according to this embodiment is coupled to a plurality of servers 102A and 102B through the network 103. When it is not necessary to distinguish between the servers 102A and 102B, each of the servers 102A and 102B may simply be referred to as the server 102. The user information providing apparatus 101 includes the program receiver 201, the program execution unit 202, the user information accumulation management unit 203, the user information extracting unit 204, the filter information accumulation management unit 205, and the access controller 206. The user information providing apparatus 101 further includes a program authentication unit 208. The program authentication unit 208 is generated on the main storage unit such as a RAM when the CPU executes the program. The respective functions of the program receiver 201, the program execution unit 202, and the user information accumulation management unit 203 are similar to those in the first embodiment. Therefore, the respective functions will not be further elaborated here. The respective functions of the program execution unit 202 and the user information accumulation management unit 203 are similar to those in the first embodiment. Therefore, the respective functions will not be further elaborated here.

The program receiver 201 has a function to receive the user information using program from the server 102, similarly to the first embodiment. The program receiver 201 also has a function to establish an encrypted communication session with the server 102 and to perform encrypted communication in the previous step of the receiving. The encrypted communication is a communication in which data is transmitted and received as follows. The encrypted communication encrypts data when transmitting the data, and decrypts data when receiving the encrypted data. Specifically, for example, the program receiver 201 has an HTTPS (Hypertext Transfer Protocol over Secure Socket Layer) communication function. Further, the program receiver 201 has a following function. When the program receiver 201 performs the encrypted communication with a secure server, the program receiver 201 obtains a server certificate such as a public key certificate of the server 102 through the network 103, and stores the server certificate within the user information providing apparatus 101. The server certificate is stored, for example, in the filter information accumulation management unit 205. The communication is not limited to the HTTPS communication based on the public key certificate insofar as the server is securely authenticated, and the encrypted communication is achieved.

The filter information accumulation management unit 205 stores the filter information, which is described in the second embodiment, for each server 102. FIG. 11 is a table illustrating an exemplary data configuration of the filter information according to this embodiment. As illustrated in the table, the filter information is stored such that the user attribute information and its use availability information correspond to server identification information that identifies the servers 102. For example, the server identification information is a local unique ID (for example, the ID expressed by numerical values, characters, symbols or the like) generated to uniquely identify the servers 102 in the user information providing apparatus 101. In the example of FIG. 11, the reference numerals of the servers 102A and 102B in FIG. 10 correspond to the server identification information. The filter information accumulation management unit 205 stores the server information related to the servers 102 using the server identification information as indexes. The server information is information to prove reliability of the servers 102, and includes authentication information related to the server certificate used for authentication in the encrypted communication with the servers 102, encrypted communication information used for the encrypted communication, display information related to a display at the servers 102, server name information indicating names for the servers 102, and the like. FIG. 12 is a table illustrating exemplary server information. As illustrated in the table, the server information includes the server identification information, certificate information indicating a path of the server certificate, and server name (service name) information. Accordingly, the server information such as the certificate information is stored. Use of the server information limits the use of the user attribute information for reliable servers only, and ensures encryption of the user attribute information when transmitting it.

The program authentication unit 208 determines whether the server information of the servers 102, which transmits the user information using program received at the program receiver 201, is stored in the filter information accumulation management unit 205. The program authentication unit 208 performs authentication on the user information using program based on the determination result. Specifically, if it is determined that the server information is stored, it is determined that the user information using program, which is received at the program receiver 201, is the user information using program transmitted from a server of a service provider with permission to use the user information. Then, the program authentication unit 208 determines that authentication of the user information using program has succeeded, and transmits the user information using program to the user information extracting unit 204. On the other hand, in the case where it is determined that the server information is not stored, the program authentication unit 208 determines that authentication of the user information using program has failed. The program authentication unit 208 then terminates the processing without transmitting the user information using program to the user information extracting unit 204.

In the case where the authentication of the user information using program has succeeded, the user information extracting unit 204 analyzes the user information using program transmitted from the program authentication unit 208. The user information extracting unit 204 then extracts the user attribute information to be used when the user information using program is executed, and determines whether transmission of the extracted user attribute information to the servers 102 is requested. In this way, the user information extracting unit 204 extracts the user attribute information, which is requested to be used in the servers 102, and whether transmit it or not. In the case where the authentication by the program authentication unit 208 results in failed authentication of the user information using program, the user information extracting unit 204 does not perform the processing.

In the case where authentication by the program authentication unit 208 results in successful authentication of the user information using program, the access controller 206 determines whether to execute the user information using program received at the program receiver 201. The determination is based on the user attribute information, which is extracted by the user information extracting unit 204, whether transmit it or not to the servers 102 for each piece of the extracted user attribute information, and the filter information stored in the filter information accumulation management unit 205 corresponding to the servers 102. In the case where authentication by the program authentication unit 208 results in failed authentication of the user information using program, the access controller 206 does not perform the processing.

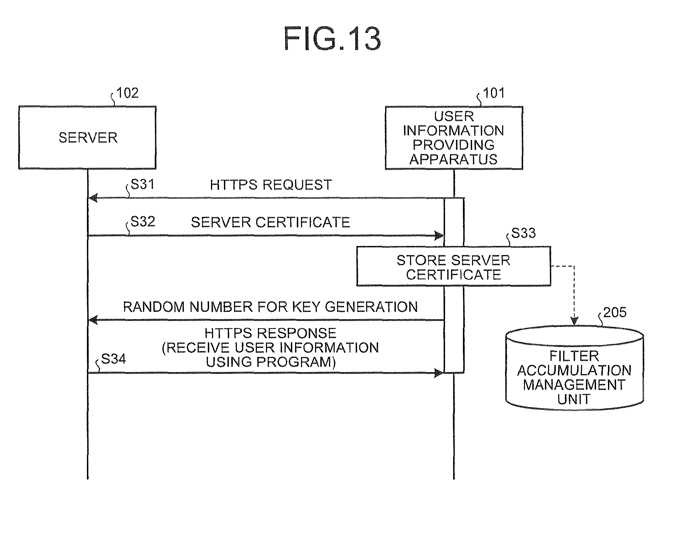

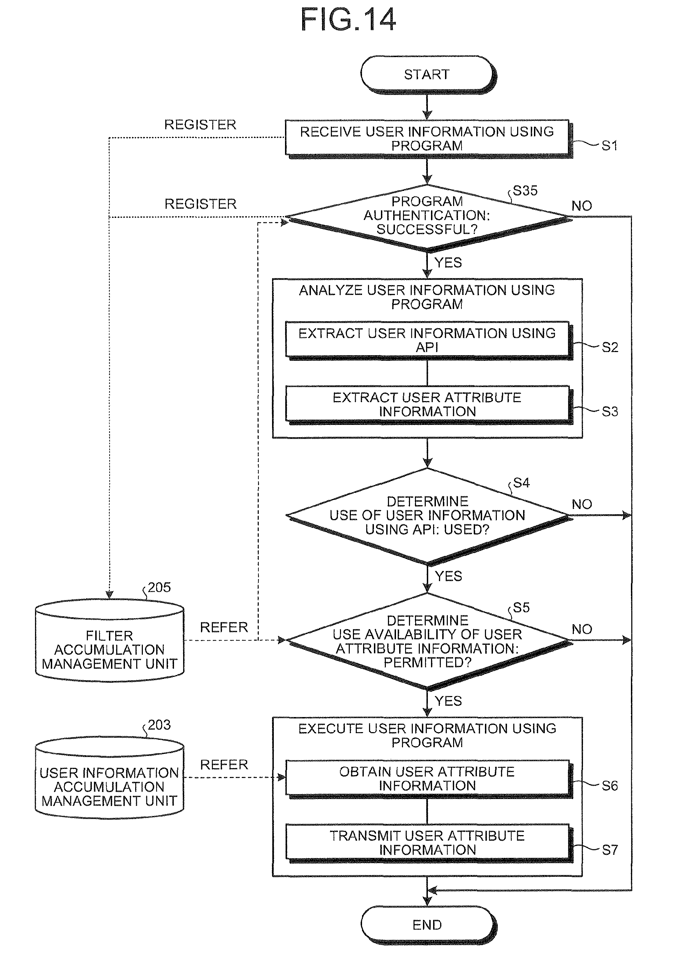

Next, a procedure of the user information providing processing executed by the user information providing apparatus 101 according to this embodiment will be described with reference to FIGS. 13 and 14. FIG. 13 is a flowchart illustrating a procedure of reception processing that receives the user information using program. FIG. 14 is a flowchart illustrating a procedure of the user information providing processing that uses the received user information using program. In the following description, the user information illustrated in FIG. 2, the user information using program illustrated in FIG. 7, the filter information exemplarily illustrated in FIG. 11, and the server information exemplarily illustrated in FIG. 12 are used. First, in step S31 of FIG. 13, the user information providing apparatus 101 uses the function of the program receiver 201. The user information providing apparatus 101 begins to establish the HTTPS communication when receiving the HTML document associated with execution of the user information using program. At this time, the user information providing apparatus 101 receives the server certificate from the servers 102 (step S32), and then associates the certificate information indicating the path of the received server certificate and the server name information indicating the names for the servers 102 with the server identification information of the servers 102. The user information providing apparatus 101 stores the certificate information and the server name information in the filter information accumulation management unit 205 (step S33). Then, the user information providing apparatus 101 receives the user information using program from the servers 102 as a response to the established HTTPS communication (step S34). Accordingly, the user information providing apparatus 101 obtains the server certificate of the servers 102 before receiving the user information using program. The user information providing apparatus 101 establishes a secure communication session with the servers 102 using HTTPS, which ensures secure communication with the server 102.

Step S34 in FIG. 13 corresponds to step S1 in FIG. 14. In step S35, the user information providing apparatus 101 uses a function of the program authentication unit 208 to determine whether the server information of the servers 102, which transmits the user information using program received in step S1, is stored in the filter information accumulation management unit 205. In the case where the server information is stored in the filter information accumulation management unit 205 (YES in step S35), authentication of the user information using program succeeds. Then, the process proceeds to step S2. In the case where the server information is not stored in the filter information accumulation management unit 205 (NO in step S35), authentication of the user information using program fails. Thus, the user information providing apparatus 101 terminates the user providing processing. Steps S2 to S4 are similar to those in the second embodiment.

In step S5, the user information providing apparatus 101 determines whether to execute the user information using program received at the program receiver 201. The determination is based on the user attribute information and whether to transmit the user attribute information or not, which are extracted in step S3, and the filter information stored in the filter information accumulation management unit 205 corresponding to the servers 102. For example, in the example of FIG. 11, regarding the server 102A with the server identification information of "102A", the availability information of the sex information and the age information are both set to restricted disclosure (protected). Regarding the server 102B with the server identification information of "102B", the availability information of the sex information is set to restricted disclosure (protected), while the availability information of the age information is set to disclosure (public). In this case, if a server that has transmitted the user information using program in step S1 is the server 102A, execution of the user information using program is rejected in step S5. In contrast, if a server that has transmitted the user information using program in step S1 is the server 102B, the execution of the user information using program is permitted in step S5. Subsequent steps S6 and S7 are similar to those in the second embodiment.

As described above, according to this embodiment, the user information providing apparatus performs the access control corresponding to the disclosure ranges in units of the user attribute information, for requests to use the user information from a plurality of different servers. The user information providing apparatus performs the access control for each server. For example, this ensures the following access control. Use including transmission of certain information in the user attribute information to one server is permitted, while reference of the certain information is permitted but the transmission of the certain information is not permitted for another server. Thus, this embodiment ensures access control for each area of a website provided by the service provider (for each branch of an HTML document tree) in units of the user attribute information.

### Fourth Embodiment

Next, a fourth embodiment of the information processing apparatus will be described. The same reference numerals designate corresponding or identical elements to those of the first to the third embodiments and therefore such elements will not be further elaborated here.

The configuration of the information processing system with the user information providing apparatus 101 according to this embodiment and the functional configuration of the user information providing apparatus 101 are similar to those illustrated in FIG. 10, which is referred to in the description of the third embodiment. In the fourth embodiment, the respective functions of the program receiver 201, the filter information accumulation management unit 205, and the program authentication unit 208 are different from those in the third embodiment.

The program receiver 201 establishes an encrypted communication session with the servers 102, and performs encrypted communication. Then, the program receiver 201 receives signature information used for authenticating the user information using program itself, along with the user information using program. In this case, in the case where the user information using program is transmitted with the signature information in a format where a plurality of files is archived, when the program receiver 201 receives the archived file (which is called an archive file), the program receiver 201 extracts respective files of the user information using program and the signature information from the archive file. The archive file is, for example, a JAR (Java (registered trademark) Archive) file that is a Java (registered trademark) Script program with the signature information. For example, the program receiver 201 accesses a link destination (For example, http://102A.com/path/to/program.jar!/service1.js) that is embedded in the HTML document displayed on the web browser to receive the archive file (program.jar) and extracts the file (service1.js) of the user information using program and the file of the signature information from this archive file. For example, the signature information is information indicative of an electronic signature corresponding to the server certificate described in the above third embodiment. Similarly to the third embodiment, the program receiver 201 has the following function. When the program receiver 201 performs encrypted communication with a secure server, the program receiver 201 obtains the server certificate such as the public key certificate of the servers 102 through the network 103 and then stores the server certificate in the user information providing apparatus 101.

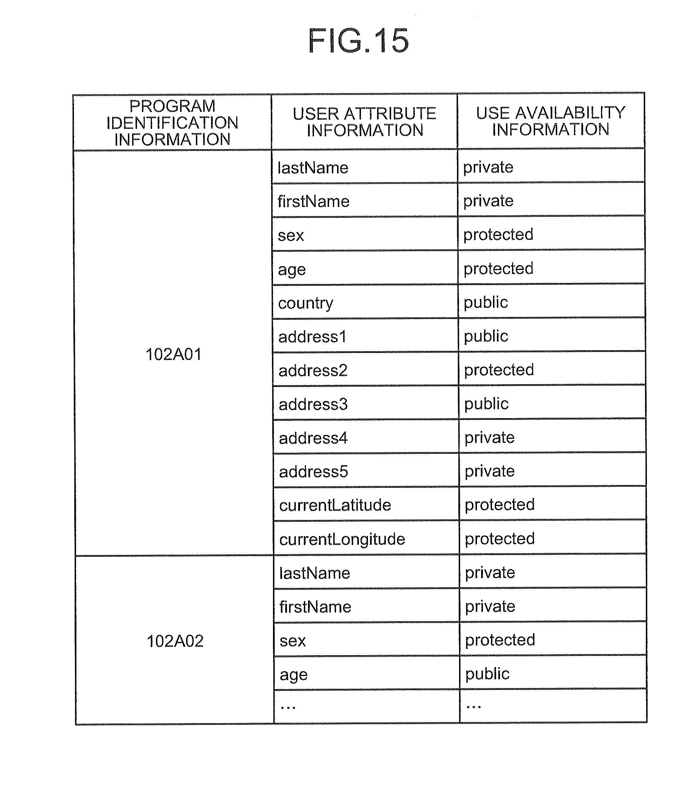

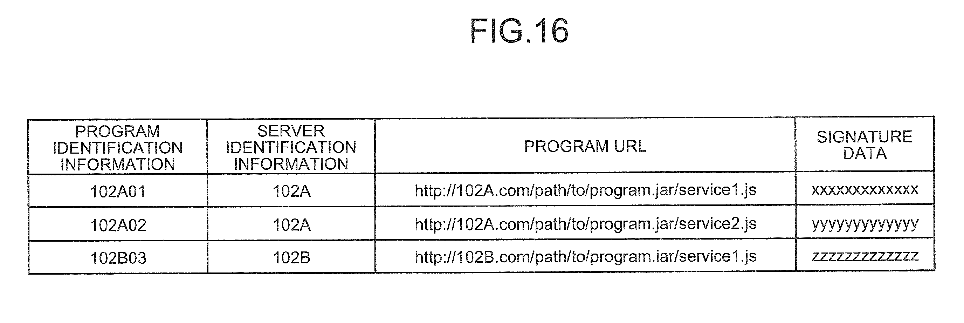

The filter information accumulation management unit 205 stores the filter information that is described in the second embodiment for each user information using program provided by the servers 102. FIG. 15 is a table illustrating an exemplary data configuration of the filter information according to this embodiment. As illustrated in the table, the user attribute information and its use availability information corresponding to program identification information, which identifies the user information using program, are stored as the filter information. The program identification information is a local unique ID that is, for example, generated to uniquely identify the user information using program within the user information providing apparatus 101. The filter information accumulation management unit 205 stores program related information, which is related to the user information using program, using the program identification information as indexes. The program related information includes the server identification information described in the third embodiment, URL information that indicates where to store the user information using program, the signature information of the user information using program, and the like. FIG. 16 is a table illustrating exemplary program related information according to this embodiment. As illustrated in the table, the program related information includes the program identification information, the server identification information, the URL information, and the signature information. The server identification information is similar to that in the third embodiment. Similarly to the third embodiment, the filter information accumulation management unit 205 stores the server information exemplarily illustrated in FIG. 12.

The program authentication unit 208 performs authentication of the user information using program based on a signature verification result when the server certificate of the server 102, which transmits the user information using program received by the program receiver 201, is stored in the filter information accumulation management unit 205. The signature verification is performed using the server certificate and the signature information, which is received along with the user information using program at the program receiver 201. Specifically, in the case where the program authentication unit 208 determines that the user information using program is transmitted from a secure server based on the signature verification result, authentication of the user information using program succeeds. In the case where the program authentication unit 208 determines that the user information using program is not transmitted from a secure server, authentication of the user information using program fails. In the case where the authentication of the user information using program has succeeded, the program authentication unit 208 stores program related information in the filter information accumulation management unit 205. The program related information includes the program identification information of the user information using program, the server identification information of the server 102 that has transmitted the user information using program, the URL information of the user information using program, and the signature information. Then, the program authentication unit 208 transmits the user information using program to the user information extracting unit 204. In the case where the authentication of the user information using program has failed, the program authentication unit 208 terminates the processing.

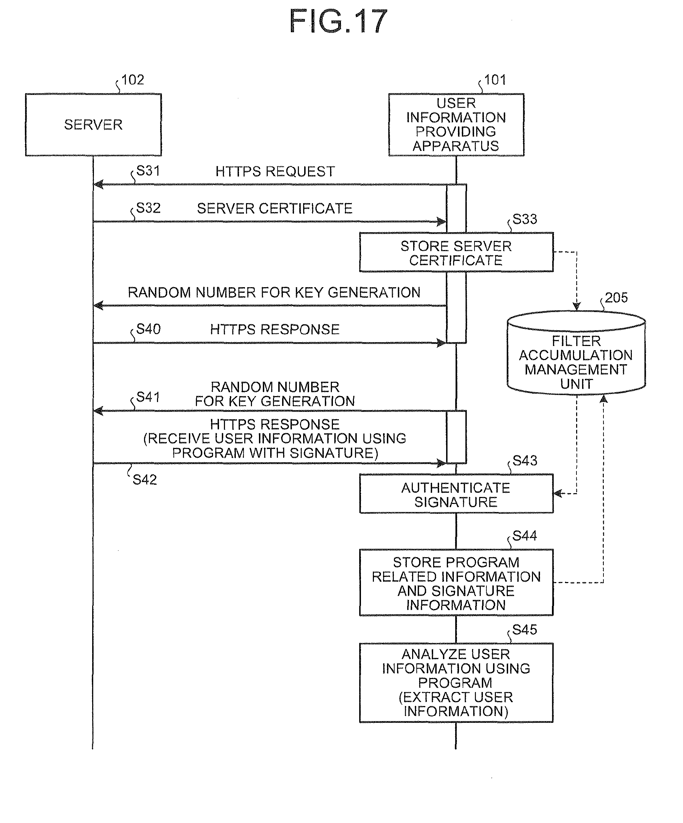

Next, a procedure of the user information providing processing executed by the user information providing apparatus 101 according to this embodiment will be described with reference to FIGS. 17 and 14. FIG. 17 is a flowchart illustrating a procedure of reception processing that receives the user information using program. In the following description, the user information illustrated in FIG. 2, the user information using program illustrated in FIG. 7, the filter information exemplarily illustrated in FIG. 15, the server information exemplarily illustrated in FIG. 12, and the program related information exemplarily illustrated in FIG. 16 are used. First, steps S31 to S33 of FIG. 17 are similar to those in the third embodiment. In step S40, when the user information providing apparatus 101 receives a response of the established HTTPS communication using the function of the program receiver 201, the user information providing apparatus 101 transmits an HTTPS request that requests the user information using program (step S41). Then, the user information providing apparatus 101 receives an archive file including the user information using program with the signature information from the servers 102 as a response of the HTTPS communication (step S42). Then, the user information providing apparatus 101 extracts the respective files of the user information using program and the signature information from the archive file.

Then, the user information providing apparatus 101 uses the function of the program authentication unit 208 to perform authentication of the user information using program extracted from the archive file (step S43). In the case where the authentication has succeeded, the user information providing apparatus 101 stores the program related information in the filter information accumulation management unit 205 (step S44). The program related information includes the program identification information of the user information using program, the server identification information of the servers 102 that have transmitted the user information using program, the URL information of the user information using program, and the signature information. Then, the user information providing apparatus 101 analyzes the user information using program (step S45).

Step S42 in FIG. 17 corresponds to step S1 in FIG. 14. Steps S43 to S44 in FIG. 17 are included in step S35 in FIG. 14. In step S35, the user information providing apparatus 101 performs authentication of the user information using program based on a signature verification result when the server certificate of the servers 102, which has transmitted the user information using program, is sorted in the filter information accumulation management unit 205. The signature verification result is based on the server certificate and the signature information received along with the user information using program by the program receiver 201. In the case where it is determined that the user information using program is transmitted from a secure server based on the signature verification result (YES in step S35), authentication of the user information using program succeeds. Then, the user information providing apparatus 101 stores the program related information in the filter information accumulation management unit 205. The program related information includes the program identification information of the user information using program, the server identification information of the servers 102 that has transmitted the user information using program, the URL information of the user information using program, and the signature information. On the other hand, in the case where it is determined that the user information using program is not transmitted from a secure server based on the signature verification result (NO in step S35), authentication of the user information using program fails, and the user information providing apparatus 101 terminates the user providing processing. Steps S2 to S4 are similar to those in the second embodiment.

In step S5, the user information providing apparatus 101 uses the user attribute information and whether to transmit the user attribute information or not, which are extracted in step S3, the filter information stored in the filter information accumulation management unit 205 corresponding to the servers 102 to determine whether to execute the user information using program, which is received at the program receiver 201. For example, in the example of FIG. 15, regarding the user information using program with the program identification information of "102A01", respective pieces of use availability information of the sex information and the age information are both set to restricted disclosure (protected). Regarding the user information using program with the program identification information of "102A02", use availability information of the sex information is set to restricted disclosure (protected), while use availability information of the age information is set to disclosure (public). In this case, if the program identification information of the user information using program, which is received in step S1, is "102A01", execution of the user information using program is rejected in step S5. On the other hand, in the case where the program identification information of the user information using program, which is received in step S1, is "102A02", execution of the user information using program is permitted in step S5. Subsequent steps S6 to S7 are similar to those in the second embodiment.

As described above, according to this embodiment, the user information providing apparatus performs the access control in units of the user attribute information based on the disclosure range, for the request for using the user information from the server not only for each server but also for each user information using program. For example, this ensures the following access control. Even for the same server, one user information using program is permitted to use certain information among the user attribute information such as transmission, while another user information using program is permitted to refer the certain information, but not permitted to transmit it. Thus, this embodiment ensures access control for each user information using program (for each leaf of an HTML document tree) in units of the user attribute information.

### Fifth Embodiment

Next, a fifth embodiment of the information processing apparatus will be described. The same reference numerals designate corresponding or identical elements to those of the first to the fourth embodiments and therefore such elements will not be further elaborated here.

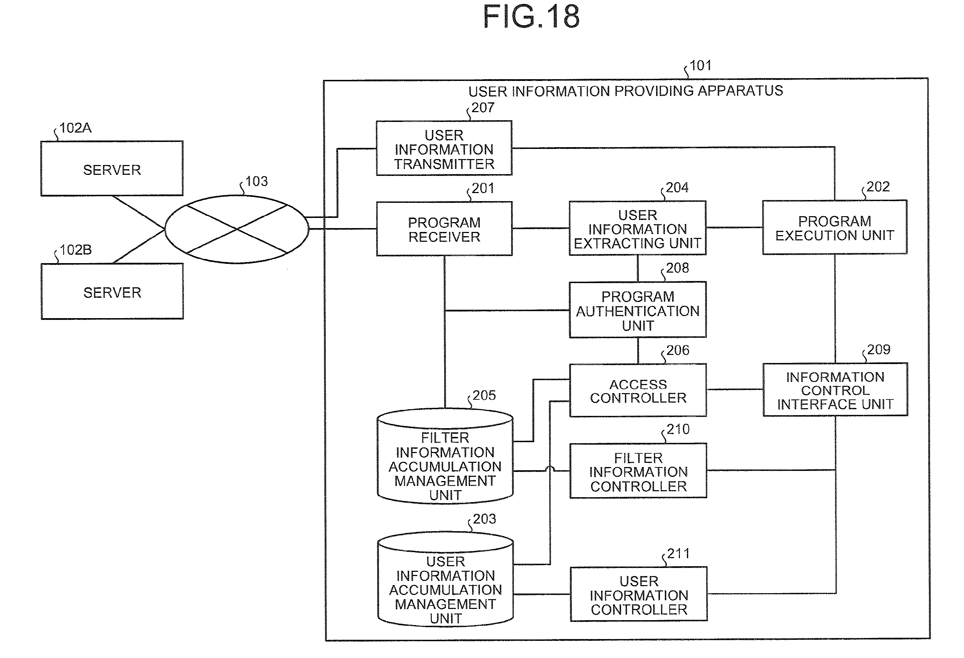

FIG. 18 is a block diagram illustrating an exemplary configuration of an information processing system including the user information providing apparatus 101 according to the fifth embodiment. FIG. 18 also illustrates an exemplary functional configuration of the user information providing apparatus 101. The user information providing apparatus 101 according to this embodiment includes the program receiver 201, the program execution unit 202, the user information accumulation management unit 203, the user information extracting unit 204, the filter information accumulation management unit 205, the access controller 206, the user information transmitter 207, and the program authentication unit 208. The user information providing apparatus 101 further includes an information control interface unit 209, a filter information controller 210, and a user information controller 211. The information control interface unit 209, the filter information controller 210, and the user information controller 211 are generated on the main storage unit such as a RAM when the CPU executes the program. The program receiver 201, the program execution unit 202, the user information accumulation management unit 203, the user information extracting unit 204, the filter information accumulation management unit 205, the access controller 206, the user information transmitter 207, and the program authentication unit 208 are similar to those in the fourth embodiment. Thus, the respective members will not be further elaborated here.

The information control interface unit 209 provides an interface to allow the user to browse the user attribute information, which is stored in the user information accumulation management unit 203, and the filter information, which is stored in the filter information accumulation management unit 205 to edit and remove them, to register the user attribute information on the user information accumulation management unit 203, and to register the filter information on the filter information accumulation management unit 205. The information control interface unit 209 provides an interface that causes the displaying unit to display, for example, the user attribute information exemplarily illustrated in FIG. 2 and receives operation input by the user. The operation input changes the user attribute information such as hobby information and address information and also removes the user attribute information. Then, the information control interface unit 209 provides instructions to the user information controller 211 corresponding to the operation input through an operation input unit by the user. The operation input includes registration, removal, and change of the user attribute information in the user information accumulation management unit 203. For example, the information control interface unit 209 also provides the interface to cause the displaying unit to display the filter information exemplarily illustrated in FIG. 11, and to set the use availability information for each piece of user attribute information again. Then, the information control interface unit 209 provides instructions to register, remove, and change the filter information in the filter information accumulation management unit 205 to the filter information controller 210, corresponding to the operation input through the operation input unit by the user.

The information control interface unit 209 is, for example, displayed on the displaying unit as a setting menu interface. The information control interface unit 209 may be initiated by the operation input of the user through the operation input unit and implemented corresponding to a display of the setting menu interface and reception of the operation input. The information control interface unit 209 may be asynchronously initiated by the processing for receiving the user information using program at the program receiver 201, or the processing for extracting the user attribute information to be used as triggers.

The information control interface unit 209 provides an interface that allows the user to select whether to authenticate the user information using program when, for example, authentication of the user information using program received at the program receiver 201 has failed. In response to this, if the user performs the operation input to authenticate the user information using program, the information control interface unit 209 receives this operation input and provides an instruction to the filter information controller 210 to store the program related information in the filter information accumulation management unit 205. Further, when the access controller 206 has not permitted use of the user attribute information, which is extracted through analysis of the user information using program by the user information extracting unit 204, the information control interface unit 209 causes the displaying unit to display a list of the extracted user attribute information together with usage of the user attribute information requested from the servers 102 and provides an interface that allows the user to determine whether to permit use of the user attribute information. In contrast, if the user performs the operation input to permit the use, the information control interface unit 209 receives the operation input and provides instructions on the filter information, which is stored in the filter information accumulation management unit 205, to the filter information controller 210 for changing the use availability information of the user attribute information.

The filter information controller 210 registers, removes, and changes the filter information in the filter information accumulation management unit 205 based on the instructions from the information control interface unit 209 and stores the server information in the filter information accumulation management unit 205. The user information controller 211 registers, removes, and changes the user attribute information, which is stored in the user information accumulation management unit 203, based on the instructions from the information control interface unit 209.

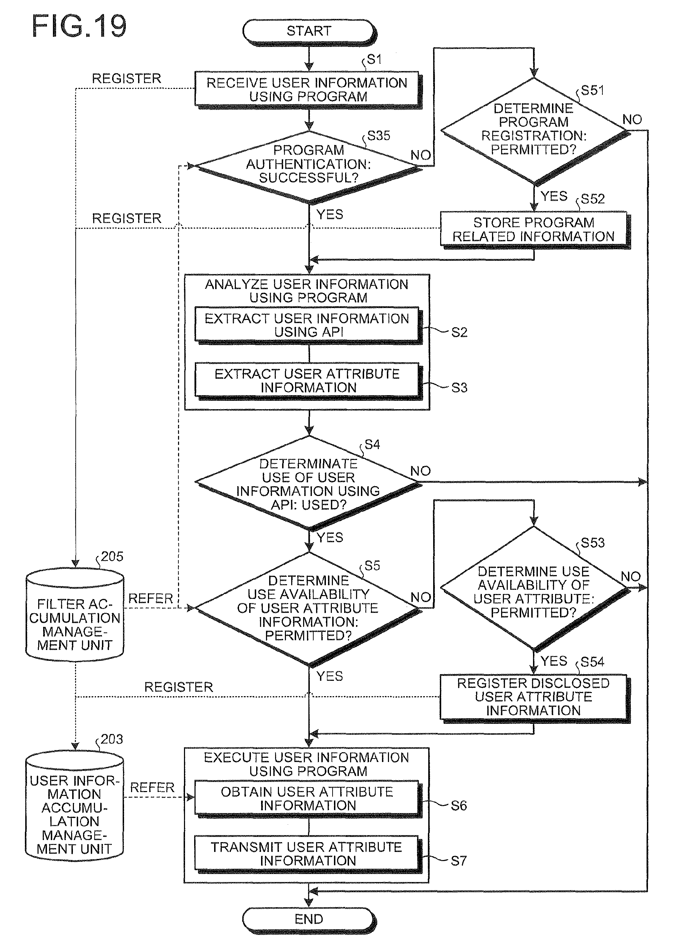

Next, a procedure of the user information providing processing executed by the user information providing apparatus 101 according to the fifth embodiment will be described with reference to FIG. 19. In the following description, the user information illustrated in FIG. 2, the user information using program illustrated in FIG. 7, the server information exemplarily illustrated in FIG. 12, and the filter information exemplarily illustrated in FIG. 15 are used. Step S1 is similar to that in the third embodiment, and corresponds to the steps S31 to S33 and S40 to S42 in FIG. 17. Step S35 is similar to that in the fourth embodiment. If the authentication has failed in step S35 (NO in step S35), the user information providing apparatus 101 uses a function of the information control interface unit 209 to provide an interface that allow the user to select whether to authenticate the user information using program (step S51). For example, this is implemented on the browser in a form of a pop-up window or the like. For example, the user information providing apparatus 101 causes the displaying unit to display a message such as "The user information using program "102A01" of XXX service is requesting permission for use of user information. Do you authenticate the user information using program?" If the user performs operation input not to authenticate the user information using program for the message through the operation input unit (NO in step S51), the user information providing apparatus 101 terminates the processing. If the user performs operation input to authenticate the user information using program through the operation input unit (YES in step S51), the user information providing apparatus 101 receives the operation input, and stores the program related information in the filter information accumulation management unit 205 (step S52). The program related information includes the program identification information of the user information using program, the server identification information of the server 102 that has transmitted the user information using program, the URL information of the user information using program, and the signature information.

Steps S2 to S7 are similar to those in the fourth embodiment. In step S5, the user information providing apparatus 101 causes the displaying unit to display the list of the user attribute information extracted in step S3 together with usage of the user attribute information, which is requested from the servers 102, using the function of the information control interface unit 209 if the filter information for the user information using program received in step S1 is not stored in the filter information accumulation management unit 205, that is, if the use availability information for each piece of the user attribute information is not set for the user information using program (NO in step S5). That is, because the usage of the user attribute information corresponds to disclosure (public) or restricted disclosure (protected), which is set in the use availability information, the user information providing apparatus 101 causes the displaying unit to display the message corresponding to these. Specifically, for example, the following message is displayed. "The program is requesting use of 'sex information' without disclosing the information to the server (privacy is protected), and use of 'age information' with disclosing the information to the server (The disclosure is for temporarily use of the information to select information on the server. Thus, the disclosed information is not accumulated or used for other purposes.). Do you permit the request?" The user information providing apparatus 101 causes the displaying unit to display the message together with an interface that allow the user to determine whether to permit use of the user attribute information (step S53). This also is implemented on the browser in the form of the pop-up window or the like. The interface may allow the user to determine whether to permit use of information for each piece of the extracted user attribute information, or may allow the user to determine whether to permit use of all pieces of the user attribute information at one time. In this interface, if the user has performed operation input to permit use of the user attribute information (YES in step S53), the user information providing apparatus 101 receives the operation input, and uses a function of the filter information controller 210 to store the filter information related to the user attribute information, which is permitted to use, in the filter information accumulation management unit 205 (step S54). At this time, the user information providing apparatus 101 sets use availability setting information of the user attribute information to a value corresponding to the usage requested from the servers 102. For example, in the above example, the user information providing apparatus 101 sets use availability information of the sex information to restricted disclosure and also sets use availability information of the age information to disclosure. In contrast, if the user performs operation input to reject use of the user attribute information (NO in step S53), the user information providing apparatus 101 terminates the user information providing processing.

As described above, this embodiment flexibly changes a method of the access control in units of the user attribute information corresponding to the disclosure range for the request for using the user information from the server of the service provider, through the user interface. Also, this embodiment allows the user to confirm use availability of the user attribute information and to set use availability in detail for each reception of the user information using program. This allows the user to confirm usage status of the user attribute information from the secure server each time, and to securely receive the service using the user attribute information.

### Modifications

The present invention is not limited to the above-described embodiments as they are. The present invention can be embodied by modifying the constituent elements within the scope of the present invention in an implementation phase. A plurality of constituent elements that are disclosed in the embodiments may appropriately be combined to configure various inventions. For example, some of the constituent elements illustrated in the embodiments may be eliminated. Further, constituent elements in different embodiments may be occasionally combined. In addition, various modifications are possible as described in the following examples.

In each embodiment described above, each program executed in the user information providing apparatus 101 can be saved on a computer connected to a network such as the Internet and can be downloaded therefrom via the network. Alternatively, each program can be provided as a computer program product in the form of an installable file or an executable file on a computer-readable storage device such as a CD-ROM, an FD (flexible disk), a CD-R, or a DVD (digital versatile disk).

In each embodiment described above, the user information using program is not limited to the above-described example insofar as the user information using program is able to logically extract the user information to be used by analyzing the program code. Any description language may be used. For example, an ECMAScript program that is embedded in a BML (Broadcast Markup Language) document may be used.

In each embodiment described above, if the network 103 is the Internet or an NGN, it is preferred that the program receiver 201 of the user information providing apparatus 101 be configured using an HTTP (Hypertext Transfer Protocol) client implemented on a TCP (Transmission Control Protocol), an RTP (Real-time Transport Protocol) client implemented on a UDP (User Datagram Protocol), or a FLUTE (File Delivery over Unidirectional Transport) client. However, any communication protocol may be used insofar as the program receiver 201 can receive the user information using program from the server 102. In the case where the network 103 is a digital terrestrial broadcasting network, the program receiver 201 has, for example, a function to receive data broadcasting and receives a user information using program transmitted by the data broadcasting.

The program execution unit 202 may not have a function to analyze and execute an HTML renderer and a Java (registered trademark) Script. For example, the program execution unit 202 may have a function to analyze and execute a BML renderer and an ECMAScript.

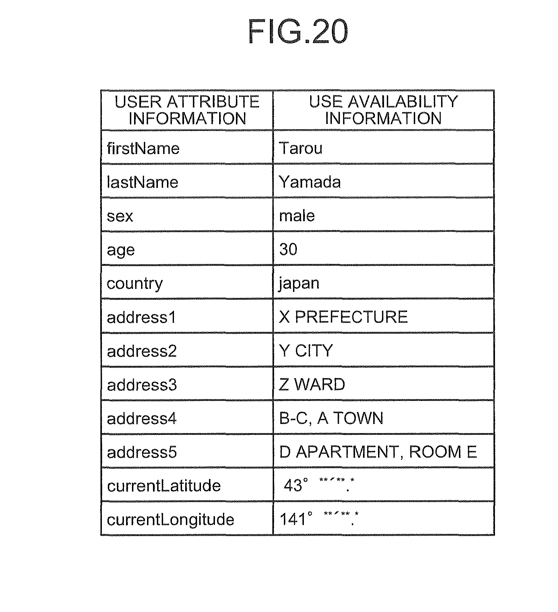

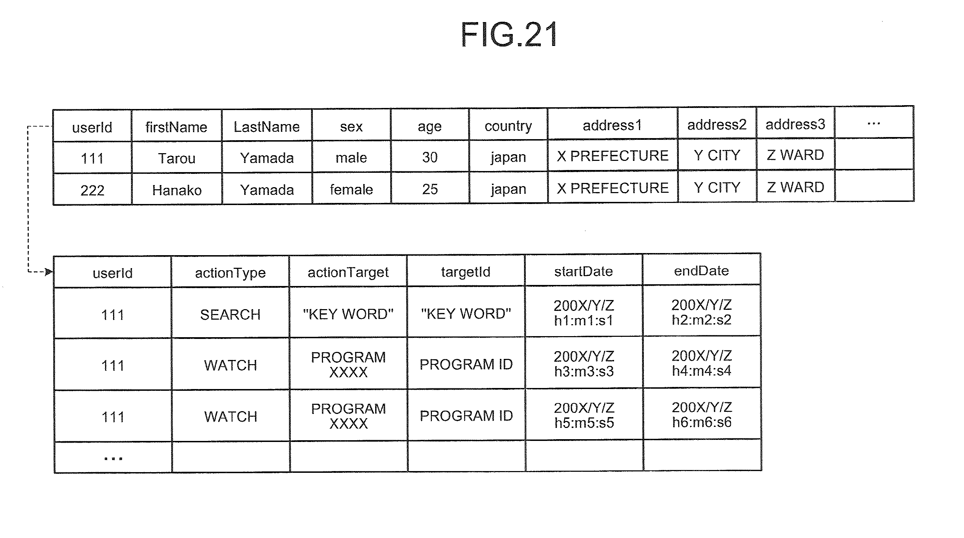

In each embodiment described above, the user information accumulation management unit 203 and the filter information accumulation management unit 205 are not limited to the above-described example and may be a relational database. The relational database is not necessarily established with a single database management system, and a plurality of database management systems such as an SQLite3, an Oracle, a MySQL may be used in parallel. The relational database may be established on one physical storage unit or may be a database management system configured to have a plurality of physical auxiliary storages such as NAS (Network Attached Storage) and SAN (Storage Area Network). FIG. 20 is a table illustrating an exemplary configuration of user information, which is stored using a Key/Value store indicative of a combination of user attribute name and user attribute value. FIG. 21 is a table illustrating an exemplary configuration of hierarchical user information, which is managed by a relational database management system. The user information accumulation management unit 203 and the filter information accumulation management unit 205 may not be database management systems insofar as they include means for obtaining unit information (entries), which is data stored in each accumulation management unit. For example, the user information accumulation management unit 203 and the filter information accumulation management unit 205 may be configured as a file group simply in a CSV format or the like or a Key/Value store. The user information accumulation management unit 203 does not necessarily store the user information in a non-volatile area of the auxiliary storage unit, and may be configured to store the user information in a memory of the main storage unit. Similar configurations may be employed as the filter information to be stored in the filter information accumulation management unit 205.

In each embodiment described above, the common description format of the user information and the common API to access the user information are not limited to the above-described examples. For example, the common description format may be expressed as a hierarchical object of a Java (registered trademark) Script. The common API to access the user information may be configured using an XQuery or an SQL (Structured Query Language).

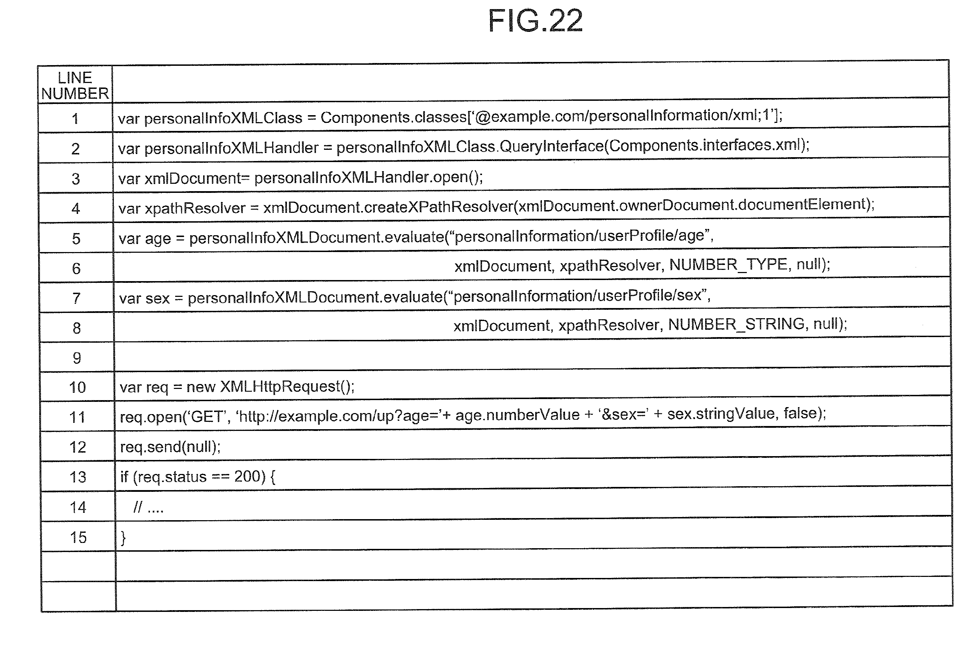

In the above second embodiment, a description to transmit the user attribute information to the servers 102 in the user information using program is not necessarily through the common API. For example, an XMLHTTPRequest of an AJAX (a combination of an Asynchronous Java (registered trademark) Script and an XML), which is a standard technique for asynchronously transmitting and receiving data between the Internet browser and the servers 102. When the user information extracting unit 204 analyzes the user information using program and finds a description that the user attribute information, which is extracted as user attribute information and requested to be used, is transmitted to the servers 102 through a general API such as an XMLHTTPRequest, the user information extracting unit 204 determines whether the user attribute information obtained through the common API is set as transmission data of the XMLHTTPRequest. FIG. 22 is a diagram illustrating an exemplary user information using program where the user attribute information is described to be transmitted through a general-purpose API (XMLHTTPRequest;.

In the third embodiment described above, the server identification information is not limited to the above-described examples insofar as the server identification information specifies the server 102 for which whether to permit use of the user attribute information is determined. For example, the server identification information may be a URL (Uniform Resource Locator) of the server 102, an IP address, server certificate data, or the like.

While in the above third and fourth embodiments, the processing of step S35, which performs authentication of the user information using program, is executed immediately after step S31, this should not be construed in a limiting sense. The processing of step S35 may be executed if the determination result of step S34 is positive. That is, the user information providing apparatus 101 may analyze the user information using program and determines that the user information is used or not. The user information providing apparatus 101 may perform the authentication of the user information using program if it is determined that the user information using program uses the user information using API, that is, the user information is used. A method for performing authentication of the user information using program is not limited to the above-described example.

In the fourth embodiment described above, the program identification information is not limited to the above-described example insofar as the program identification information can identify a target for which availability of the user attribute information is determined in units of the user information using program. For example, the program identification information may be configured to uniquely identify the user information using program using the server identification information described in the third embodiment and relative path information from a URL of the servers 102. The program identification information may be configured to identify the user information using program, using the absolute path that uniquely identifies it.

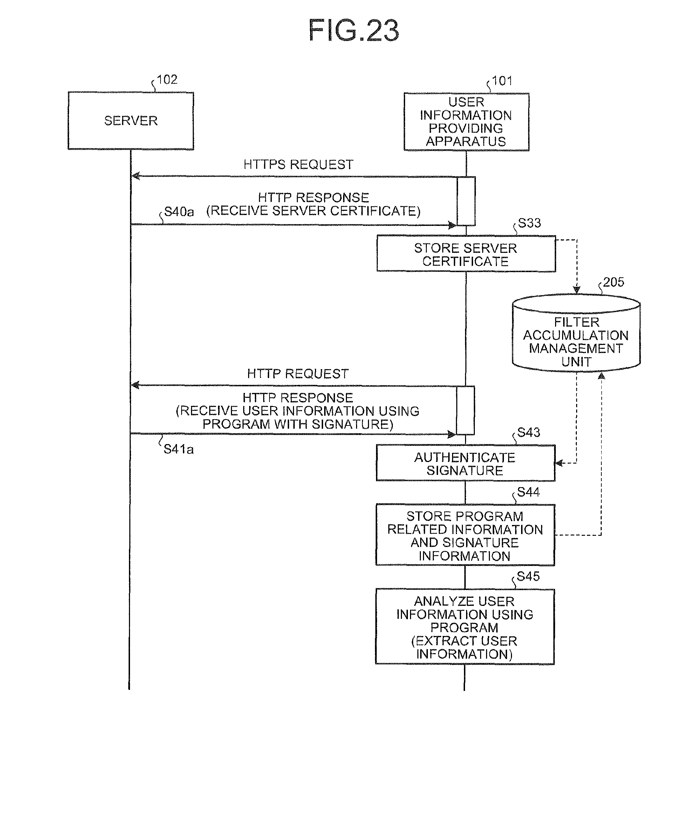

In the fourth embodiment described above, the servers 102 may use the user attribute information without the HTTPS communication insofar as usage of the user attribute information corresponds to restricted disclosure (protected), that is, insofar as the user attribute information is not transmitted to the servers 102. That is, FIG. 23 is a flowchart illustrating a procedure of reception processing according to this modification. In step S40a, the user information providing apparatus 101 uses the function of the program receiver 201 so as to begin to establish HTTP communication, and receives the server certificate from the servers 102. Then, the user information providing apparatus 101 associates the certificate information indicating a path of the received server certificate and the server name information indicating a name for the server 102 with the server identification information of the servers 102 and stores the information in the filter information accumulation management unit 205 (step S33). Then, the user information providing apparatus 101 receives plain data of an archive file from the server 102 as a response of the established HTTP communication (step S41a). The archive file is the user information using program with the signature information. Steps S43 to S45 are similar to those in the fourth embodiment.

Such configuration allow for the use of the user attribute information in the servers 102 with privacy protected without encrypted communication. Thus, this reduces processing load to perform the encrypted communication.

In the third embodiment described above, though the use availability information is configured to take three values of disclosure (public), restricted disclosure, and non-disclosure (private), this should not be construed in a limiting sense and various setting values may be taken. In this configuration, the fifth embodiment described above uses the function of the access controller 206 to provide the interface that allows the user to determine whether to permit use of the user attribute information if use of the user attribute information is not permitted. However, in this case, the use availability information may be set to setting value of complete non-disclosure that indicates rejection of use without providing the interface that allows the user to determine the permission. For example, regarding information that identifies an individual (fullname, detailed address ("address4", "address5" or the like in FIG. 2)) in the user attribute information, the use availability information is set to complete non-disclosure. This setting may be performed by operation input of the user through the information control interface unit 209. Furthermore, the user information providing apparatus 101 may use the function of the information control interface unit 209 to cause the displaying unit to display the list of the user attribute information that is permitted to be used for a specific server or a specific user information using program (which is called a permitted user attribute information list) for each execution of the user information using program. In addition, the user information providing apparatus 101 may use the function of the information control interface unit 209 to provide an interface for allowing the user to determine whether or not to cause the displaying unit to display the permitted user attribute information list in a range of the once set use availability information.

In the above fifth embodiment, the interface provided by the information control interface unit 209 is not limited to the above-described examples. For example, in the case where, when the program receiver 201 receives the user information using program, the server information of the server 102 that has transmitted the user information using program is not yet stored in the filter information accumulation management unit 205, the information control interface unit 209 may cause the displaying unit to display, for example, the following message or the like. "XXX service is requesting permission to use user information. Do you download a certificate and permit the access?" Then, if the user performs operation input to permit the access of the servers 102 for the message, the information control interface unit 209 receives the operation input and stores the server information exemplarily illustrated in FIG. 12 in the filter information accumulation management unit 205 through the filter information controller 210.

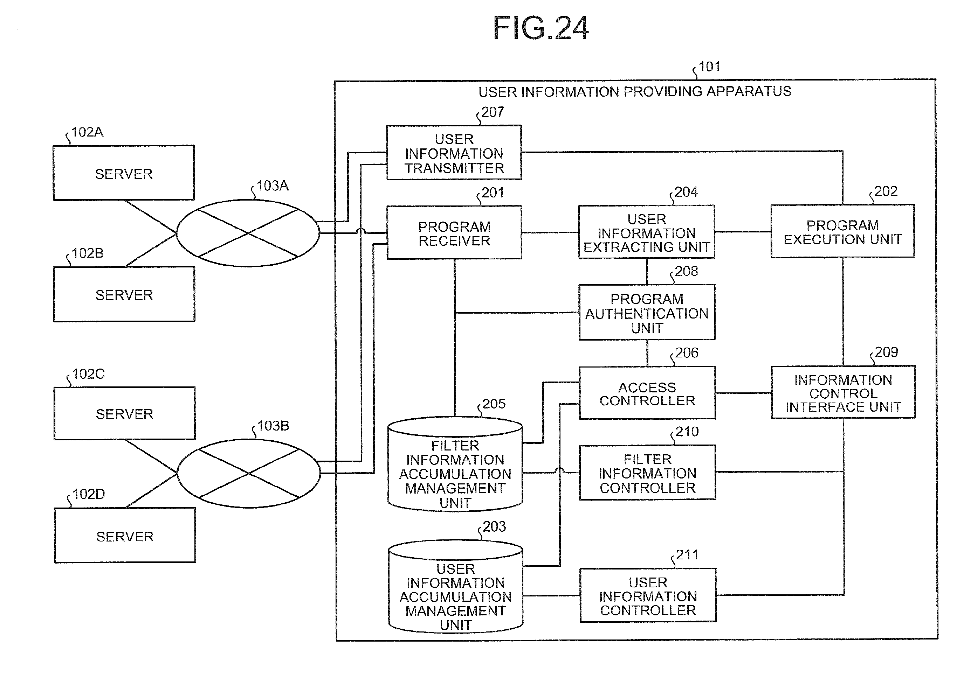

In each of the above embodiments, the user information providing apparatus 101 may be configured to be coupled to the servers 102 through a plurality of networks. FIG. 24 is a block diagram illustrating an exemplary configuration of the information processing system including the user information providing apparatus 101 according to this modification. FIG. 24 also illustrates an exemplary functional configuration of the user information providing apparatus 101. The functional configuration of the user information providing apparatus 101 is approximately similar to that in the fourth embodiment. In the information processing system in the diagram, the user information providing apparatus 101 is coupled to the servers 102A and 102B through a network 103A, and also coupled to servers 102C and 102D through a network 103B. The networks 103A and 103B are similar to the network 103 described above, and the networks 103A and 103B may be different networks from one another or using similar networks. For example, the network 103A may be the Internet, while the network 103B may be a terrestrial television broadcasting network using NGN. In the case where the network 103B is a terrestrial television broadcasting network, the user information using program is specifically an ECMAScript embedded in a BML content of data broadcasting. The servers 102C and 102D are similar to the servers 102 described above. In these configurations, the program receiver 201 and the user information transmitter 207 of the user information providing apparatus 101 perform communication through the plurality of networks 103A and 103B.

Accordingly, when the user information providing apparatus 101 is coupled to the plurality of networks 103A and 103B, network identification information for distinguishing between the plurality of networks, service information related to service for each server, program related information may be stored corresponding to the respective servers. The above information is stored in, for example, the filter information accumulation management unit 205. It is because the server identification information and the program identification information may each employ different system for each network. For example, the servers 102A and 102B, which are coupled to the Internet as the network 103A, are each identified by a pair of network type information, which indicates the network is the Internet, and URL. The servers 102C and 102D, which are coupled to the network 103B as a terrestrial television broadcasting network, are each identified by network type information indicating the network is a terrestrial television broadcasting network, network ID that can be obtained from SI (Service Information) included in MPEG-2 stream, broadcaster information, and the like for each broadcasting station.

These configurations ensure the access control corresponding to the disclosure range in units of the user attribute information when coupled to a plurality of networks.

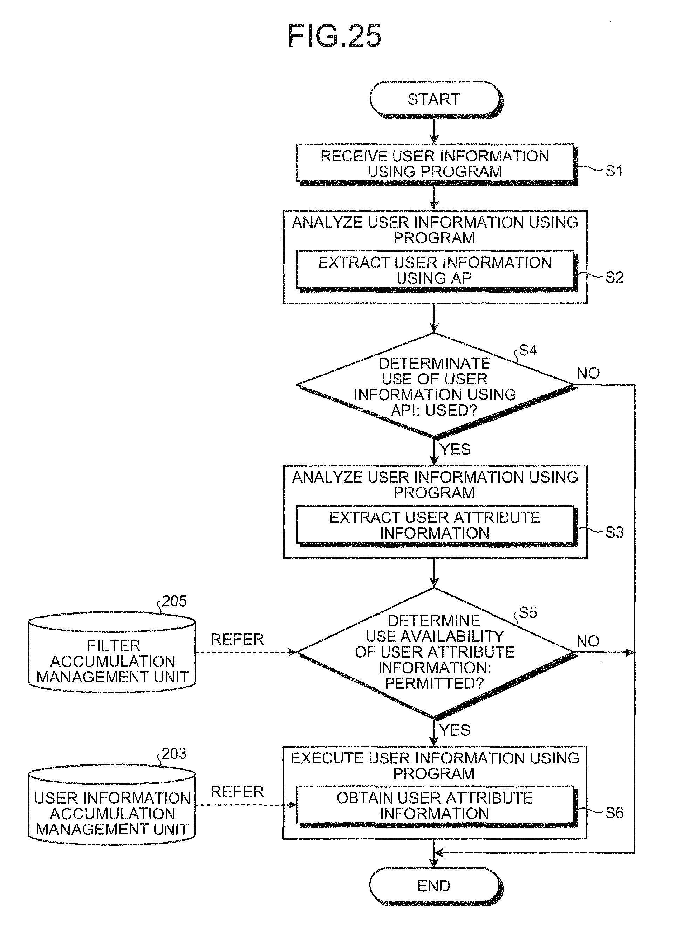

In the above first embodiment, an order of steps S2, S3, S4, and S5 is not limited to that of FIG. 5. The order may be, for example, an order in the sequence of S2, S4, S3, and S5 as illustrated in FIG. 25. That is, in FIG. 5, a case where the processing for analyzing the user information using program is executed at once is illustrated. As illustrated in the example of FIG. 25, extracting and determining the use or not of API, and extracting the user attribute information to be accessed and determining whether to use the user attribute information may be executed together. This may be applied similarly to the second to the fifth embodiments and the respective modifications.

### Reference Signs List

101 USER INFORMATION PROVIDING APPARATUS
102, 102A, 102B, 102C, 102D SERVER
103, 103A, 103B NETWORK
201 PROGRAM RECEIVER
202 PROGRAM EXECUTION UNIT
203 USER INFORMATION ACCUMULATION MANAGEMENT UNIT
204 USER INFORMATION EXTRACTING UNIT
205 FILTER INFORMATION ACCUMULATION MANAGEMENT UNIT
206 ACCESS CONTROLLER
207 USER INFORMATION TRANSMITTER
208 PROGRAM AUTHENTICATION UNIT
209 INFORMATION CONTROL INTERFACE UNIT
210 FILTER INFORMATION CONTROLLER
211 USER INFORMATION CONTROLLER

## Claims

1. An information processing apparatus, comprising:
a first storage unit configured to store user information, the user information including a plurality of pieces of user attribute information, the user attribute information indicating of attribution of a user;
a receiver configured to receive a user information using program from a server, the user information using program being configured to access the user information with a unified method;
an analyzer configured to analyze the received user information using program so as to extract the user attribute information to be used;
a second storage unit configured to store use availability information for each of the pieces of user attribute information, the use availability information indicating whether to permit use of the user attribute information;
a determiner configured to determine whether to permit the use of the user attribute information, using the use availability information of the extracted user attribute information;
an executor configured to execute the user information using program based on the determination result by the determiner; and
a controller configured to: prevent the executor from executing at least part of the user information using program, so as to reject an access from the user information using program to the user attribute information if the use of the user attribute information is determined to be not permitted; and make the executor execute the user information using program, so as to permit the access to the user attribute information if the use of the user attribute information is determined to be permitted.

2. The information processing apparatus according to claim 1, wherein
the user information using program is described in a common description format, the common description format being a description format common to between the server and the information processing apparatus regarding the use of the user attribute information, and
the analyzer is configured to analyze a description of the user information using program to extract the user attribute information to be used.

3. The information processing apparatus according to claim 2, wherein
Some of the user information using program includes a description of a request for transmission of the user attribute information regarding the use of the user attribute information, and
the analyzer is configured to: analyze the description of the user information using program to extract the user attribute information to be used; and determine whether transmission of the extracted user attribute information to the server is requested.

4. The information processing apparatus according to claim 3, wherein
the use availability information indicates one of: permitting transmission and reference; not permitting transmission but permitting reference; and not permitting transmission or reference, regarding the user attribute information, and
the determiner is configured to: determine whether to permit reference of the user attribute information, the reference of the user attribute information being requested among pieces of the extracted the user attribute information, using the use availability information; and determine whether to permit transmission of the user attribute information, the transmission of the user attribute information being requested, using the use availability information.

5. The information processing apparatus according to claim 4, further comprising
a transmitter configured to transmit the user attribute information to the server, the transmission of the user attribute information being determined to be permitted.

6. The information processing apparatus according to claim 6, wherein
the receiver is configured to receive the user information using program from the server after communicating to determine reliability of the server,
the second storage unit is configured to further store server information to prove the reliability of the server,
the information processing apparatus further includes an authentication unit configured to perform authentication of the user information using program by determining whether the server information of the server is stored in the second storage unit, the server transmitting the received user information using program, and
the executor is configured to execute the user information using program based on the determination result of the user attribute information in the case where the authentication has succeeded.

7. The information processing apparatus according to claim 6, wherein
a plurality of the servers are able to be coupled to the information processing apparatus,
the second storage unit stores the use availability information for each of the servers, and
the determiner is configured to determine whether to permit the use of the user attribute information, the user attribute information being extracted from the received user information using program, the determination being based on the use availability information corresponding to the server that has transmitted the user information using program.

8. The information processing apparatus according to claim 7, wherein
a plurality of the user information using programs are provided,
the second storage unit is configured to store the use availability information for each of the user information using programs, and
the determiner is configured to determine whether to permit the use of the user attribute information, the user attribute information being extracted from the received user information using program, the determination being based on the use availability information corresponding to the user information using program.

9. The information processing apparatus according to claim 8, further comprising:
an operation input receiver configured to receive a first operation input and a second operation input,
the first operation input performing at least one of storing, changing, and removing of the user attribute information regarding the first storage unit; and
the second operation input performing at least one of storing, changing, and removing of the use availability information regarding the second storage unit;
a first information controller configured to perform at least one of storing, changing, and removing of the user attribute information regarding the first storage unit in response to the first operation input; and
a second information controller configured to perform at least one of storing, changing, and removing of the use availability information regarding the second storage unit in response to the second operation input.

10. The information processing apparatus according to claim 9, wherein
the common description format is an XML format where the same schema is shared between the information processing apparatus and the server, and
the extractor is configured to analyze one of an XPath description and an XQuery description included in the user information using program, so as to extract the user attribute information to be used.
